# EUROPÄISCHE PATENTSCHRIFT

(11) **EP 2 614 549 B1**
(45) Veröffentlichungstag und Bekanntmachung des Hinweises auf die Patenterteilung: **27.04.2016**
(21) Anmeldenummer: 11766881.4
(22) Anmeldetag: 01.09.2011
(51) Int. Cl.: H01M 8/18, H01M 12/08, H01M 14/00, H02N 11/00, B60L 11/18, H01M 10/0525, H01M 10/058

(54) **BETANKBARER AKKU**
REFILLABLE RECHARGEABLE BATTERY
ACCUMULATEUR RAVITAILLABLE

(30) Priorität: 06.09.2010 CH 10001435 T
(43) Veröffentlichungstag der Anmeldung: 17.07.2013
(73) Patentinhaber: Aigys AG, 5507 Mellingen (CH)
(72) Erfinder: KUHS, Bernd, 79618 Rheinfelden-Herten (DE)
(74) Vertreter: Börjes-Pestalozza, Henrich
(86) Internationale Anmeldenummer: PCT/EP2011/004416
(87) Internationale Veröffentlichungsnummer: WO 2012/031719

(56) Entgegenhaltungen:
- EP-A1- 0 330 290
- WO-A1-2009/151639
- WO-A2-01/89012
- DE-A1- 2 620 792
- US-A- 3 238 070
- US-A- 4 207 382
- US-A1- 2010 291 429

## Beschreibung

Die Erfindung betrifft ein reversibles Speichersystem für elektrische Energie, umfassend eine ladungszu- oder -ableitende Fläche als Plus-Pol-Kollektor und eine ladungszu- oder -ableitende Fläche als Minus-Pol-Kollektor und eine Durchflusselektrode mit einer pumpfähigen Dispersion mit elektrische Energie speichernden Partikeln und mindestens einer Zuleitung und mindestens einer Ableitung für die pumpfähige Dispersion sowie vorzugsweise mit einem Reservoir für die pumpfähige Dispersion, sowie entsprechende Verfahren, wie jeweils in den Ansprüchen dargelegt..

Batteriesysteme zum Speichern von elektrischer Energie mittels flüssiger, pumpfähiger Medien sind ebenfalls an sich bekannt. Eine solche Vorrichtung ist beispielsweise in WO 01/03221 beschrieben, wobei diese Vorrichtung mindestens die folgenden Bestandteile enthält: (a) eine Redox-Durchflusszelle bestehend aus (i) einer Anode in einer Katholyt-Kammer, (ii) einer Kathode in einer Anolyt-Kammer, und (iii) einer für Ionen durchlässigen Membran zwischen diesen Kammern; (b) zwei Elektrolytbehälter, je einen Behälter für die Kathodenflüssigkeit (hierin auch als positives Elektrodenmaterial, "Katholyt-Flüssigkeit" oder "Katholyt" bezeichnet) und einen Behälter für die Anodenflüssigkeit (hierin auch als negatives Elektrodenmaterial, "Anolyt-Flüssigkeit" oder "Anolyt" bezeichnet), sowie (c) ein Pumpsystem, welches die Zirkulation der Kathodenflüssigkeit und der Anodenflüssigkeit von den Behältern zur Durchflusszelle und wieder zurück zu den Behältern gewährleistet.

Das Prinzip der Durchflusszelle gemäss WO 01/03221, welche auch unter dem Namen Redox-Flow-Zelle bekannt ist, beruht auf der Reduktions- und Oxidationsreaktion von flüssigen Elektrolyten. Gemäss WO 01/03221 bestehen diese im Wesentlichen aus gelösten Metallsalzen in wässrigen Medien. Die Kathodenflüssigkeit und die Anodenflüssigkeit werden mittels einer Pumpe durch die Kammern der Durchflusszelle gepumpt, in denen sich die jeweiligen Elektroden befinden. Die Elektroden bestehen typischerweise aus Graphit/Kompositmaterialien, wobei in diesen Graphitfilze zur Erhöhung der aktiven Oberfläche und damit zur Erhöhung der Leistungsdichte eingesetzt werden. Die beiden Kammern, d.h. die Katholyt-Kammer und die Anolyt-Kammer, welche auch als Halbzellen bezeichnet werden, sind durch eine ionenleitende Membran getrennt. Die einzelnen Zellen lassen sich, analog zu Brennstoffzellen, auch in Reihe zu einem Stack (Stapel) schalten. Dabei wirken die Elektroden als Bipolarelektroden und die Elektrolytdurchströmung erfolgt parallel. Einzelne Stacks können wie herkömmliche Batterien elektrisch entweder parallel oder in Serie verschaltet werden, um die gewünschte Spannung zu erreichen.

Eine Besonderheit dieser Technik besteht darin, dass durch die Trennung von Energiewandler (d.i. die Redox-Durchflusszelle) und Speichermedium (d.h. die beiden Elektrolytbehälter) Energie und Leistung unabhängig voneinander skaliert werden können. Dabei bestimmt die Elektrolytmenge die zu speichernde Energie und die Größe der aktiven Elektrodenoberflächen bestimmt die Leistung der Batterie. Dadurch, dass die Elektrolyte separat vom Wandler gespeichert werden, findet bei Stillstand der Anlage praktisch keine Selbstentladung statt. Sie tritt nur auf, wenn Elektrolyt durch die Zellen gepumpt wird.

Die ladungstragenden Flüssigkeiten (Katholyt und Anolyt) der heute bekannten Durchflusszellen bestehen aus gelösten Metallsalzen, welche nur eine begrenzte Löslichkeit haben, so dass dadurch die Energiedichte begrenzt ist. Die Energiedichte der heute bekannten Durchflusszellen bzw. Redox-Flow Zellen beträgt etwa 30-50 Wh/Kilogramm (kg), was kaum mehr ist, als was bei einem herkömmlichen Bleiakkumulator erreichbar ist. Außerdem kann es durch die wässrigen Elektrolytlösungen zu Ablagerungen und Korrosionserscheinungen an den leitenden Teilen kommen. Somit wird durch die Redox-Flow Zelle zwar ermöglicht, elektrische Energie in flüssiger Form zu bevorraten und zu tanken, doch müssten beispielsweise Fahrzeuge eine viel zu große Flüssigkeitsmenge mit sich führen, um eine angemessene Reichweite zu erzielen.

In der US 2010/0047671 wird beschrieben, wie anstelle von Lösungen von Elektrolyten in entsprechender Weise Dispersionen von Partikeln in auch Elektrolyte beinhaltenden Flüssigkeiten als Anolyte bzw. Katholyte in entsprechenden Durchflusskammern fungieren können. Doch ist bei den gezeigten Beispielen ein hoher innerer Widerstand zu erwarten, da die ableitenden Elektroden (Kollektoren) weit voneinander entfernt angeordnet sind.

EP 0 330 290 A1 beschreibt eine Dispersion aus aktivem Material enthaltende Anordnung aus zwei Halbzellen, die durch einen Separator getrennt sind.

US 4,207,382 beschreibt eine Vorrichtung zur Erzeugung elektrischer Energie, bei der eine Durchflusskathode und eibne Durchflussanode miteinander in Kontakt stehen, wobei die Kollektoren an einen Elektrolytraum und Abstandshalter angrenzen.

WO 2009/151639 nenne eine Dispersion von Partikeln mit Größen von 1 µm, die einen Elektrolyten und ein Lösungsmittel enthält und weitere Zusaätze, die benetzende und dispergierende Eigenschaften betreffen.

US 2010/291429 beschreibt ein Speichersystem für elektrische Energie, welches zwei Durchflusselektroden besitzt, die durch einen Festelektrolyten als Separator voneinander getrennt sind.

Bekannt sind auch Akkumulatoren als statische Speichersysteme für elektrische Energie, wie beispielsweise der Lithium-Akku (Li-Akku). Ein solcher Akku ist beispielsweise in EP 0 880 187 B1 beschrieben und besteht aus folgenden Komponenten: (a) einem Anodenmaterial auf einer Kollektorfolie, (b) einem Kathodenmaterial auf einer Kollektorfolie, (c) einer ionendurchlässigen Separatorfolie, sowie (d) einer nichtwässrigen Elektrolytlösung.

Beim Li-Akku wird das Anodenmaterial und das Kathodenmaterial jeweils auf eine elektrisch leitende Kollektorfolie aufgebracht. Beide Folien werden durch eine ionenleitende Separatorfolie voneinander getrennt und in eine Elektrolytlösung getaucht. Um möglichst große Oberflächen in einem kleinen Volumen unterzubringen, werden die Folien gewickelt oder gefaltet.

Beim Li-Akku wird durch die enthaltenen elektrochemischen Elemente eine Energiedichte von 140 Wh/kg erreicht, was jedoch bei einem mittleren Personenkraftwagen nur für ca. 200 km Fahrweite reicht. Außerdem sind Li-Akkus durch die aufwendige Herstellung der enthaltenen Speicherfolien sehr teuer und durch äußere Einwirkungen leicht zerstörbar. Kommt es beispielsweise durch Vibrationen zur Verletzung der enthaltenen Folie, kann dies zum Kurzschluss und damit zur Zerstörung der Zellen führen. Zur Zerstörung der Zellen kann es auch durch zu schnelle Lade- oder Entladevorgänge kommen, wenn die dünnen Folien beispielsweise durchbrennen. Viele Elektrodenmaterialien, welche eine höhere Speicherkapazität ergeben würden, sind nicht einsetzbar, da diese auf der Trägerfolie nicht ausreichend fixiert werden können. Beispielsweise würde Silizium als Anodenmaterial eine zehnfach höhere Speicherkapazität ergeben als das vergleichsweise häufig eingesetzte Graphit, doch nimmt das Volumen von Silizium beim Ladevorgang erheblich zu, so dass es auf einer Trägerfolie nicht dauerhaft fixiert werden kann. Die Speicherkapazität von herkömmlichen Akkumulatoren ist außerdem durch die bauliche Größe der Zellen limitiert. Zudem dauert ein Ladevorgang mehrere Stunden.

Weiter sind auch Kondensatoren zur Speicherung von elektrischer Energie bekannt, insbesondere Elektrolytkondensatoren und Doppelschichtkondensatoren. Kondensatoren weisen zwei Elektroden auf, deren Abstand möglichst gering ist und zwischen denen ein Bereich mit nichtleitender, isolierender Eigenschaft befindet (Dielektrikum). Bei einem Elektrolytkondensator, auch als "Elko" bezeichnet, wird auf dem Metall der Anodenelektrode durch Elektrolyse eine nichtleitende Isolierschicht erzeugt, die das Dielektrikum des Kondensators bildet. Der Elektrolyt bildet die Kathode (Gegenelektrode). Sie kann aus einem flüssigen oder pastösen Elektrolyten (lonenleiter) oder einem festen Elektrolyten (Elektronenleiter) bestehen. Neueste Entwicklung sind die Polymer-Elektrolyte. Drei Bauarten werden unterschieden, die als Dieleketrikum (a) Aluminiumoxid, (b) Tantaloxid oder (c) Niob-Pentoxid beinhalten.

Bekannt sind auch Doppelschicht-Kondensatoren (z.B. Markennamen Gold Cap, Supercap, Ultra Cap, Boost Cap). Diese zeichnen dich durch eine hohe Energiedichte aus. Ihre vergleichsweise hohe Kapazität beruht auf der Dissoziation von Ionen in einem flüssigen Elektrolyten, die an der Grenzschicht zu den Elektroden ein dünnes Dielektrikum von wenigen Atomlagen bilden. Das Prinzip der Energiespeicherung in der elektrochemischen Doppelschicht (Helmholtz-Schicht) ist an sich bekannt. Die relativ hohe Kapazität beruht auf der geringen Dicke der Doppelschicht. Als Elektrodenmaterial wird häufig Kohlenstoff in verschiedenen Modifikationen verwendet: Als Elektrolyte können wässrige Elektrolytlösungen verwendet werden, doch kommen vorwiegend organische Elektrolyte auf der Basis von quaternären Salzen wie Tetraethylammonium-borofluorid (TEABF), gelöst in Acetonitril oder Propylencarbonat, zum Einsatz. Organische Elektrolyte erlauben eine Zellspannung von typischerweise 2,5 V. Wässrige Elektrolyte wie Kaliumhydroxid (KOH) oder Schwefelsäure (H₂SO₄) weisen eine Nennspannung von maximal 1,2 V auf, haben jedoch wegen des deutlich kleineren Innenwiderstands eine höhere Leistungsfähigkeit. Das Design von Doppelschicht-Kondensatoren unterscheidet sich nur unwesentlich von dem der Batterien. Vorwiegend handelt es sich um monopolare Anordnungen, bei denen die Elektroden gewickelt oder gestapelt sind.

Kondensatoren, insbesondere Doppelschichtkondensatoren, welche wegen ihrer höheren Energiekapazität auch als Energiespeicher für elektrische Energie Verwendung finden, sind durch ihre statisch angeordneten Ladungsträger (gewickelte Folien) in ihrer Kapazität begrenzt. So erreichen heute Doppelschichtkondensatoren lediglich eine Energiedichte von 4-20 Wh/kg.

Die Aufgabe der Erfindung besteht darin, die Energiedichten von bestehenden elektrischen Energiespeichern, wie z.B. oben beschrieben, zu steigern, deren Herstellungskosten (erheblich) zu senken, Probleme wie einen zu hohen Innenwiderstand zu vermeiden und/oder die Aufladung und Handhabung durch den Einsatz verbesserter flüssiger Speichermedien und/oder Durchflusszellen wesentlich zu vereinfachen. Ziel soll beispielsweise sein, dass Fahrzeuge in rentabler Weise und in Minutenschnelle an Tankstellen ihre Tanks füllen können, ähnlich wie dies heute mit fossilen Brennstoffen geschieht.

Diese Aufgabe wird gelöst, indem partikuläre Materialien als Energieträger verwendet werden und die weiteren Erfindungsmerkmale wie nachfolgend beschrieben verwirklicht werden.

Es wurde nun gefunden, dass es möglich ist, flüssige, pumpfähige Medien in Form einer Kathodenflüssigkeit und einer Anodenflüssigkeit herzustellen und diese in den in den Ansprüchen beschriebenen Energiespeichern mit Durchflusszellen in Akkumulatoren (überwiegend elektrochemisch), beispielsweise dem Lithium-Akku als positive und/ oder negative Elektrodenmaterialien zu verwenden, wobei die relativ zueinander positiven und negativen Partikel (Ladungsträger) in einer Trägerflüssigkeit, welche eine Elektrolytlösung darstellt, dispergiert sind. Die erfindungsgemäß verwendeten "geladenen" Elektrodenmaterialien (positives Elektrodenmaterial = Kathodenflüssigkeit und negatives Elektrodenmaterial = Anodenflüssigkeit) liegen in einer Dispersion (vorzugsweise Suspension) vor, welche die dispergierten Partikeln als Speichermaterialien (Ladungsträger), enthalten. Dabei ist die aktive Oberfläche der dispergierten Speichermaterialien, d.h. der Ladungsträger, erheblich vergrößert. Mit einer solchen Dispersion kann in den nachfolgend und in den Ansprüchen beschriebenen Vorrichtungen und Verfahren in ausgezeichneter Weise Strom erzeugt werden, wobei erheblich höhere Energiedichten erreicht werden, bei gleichzeitige deutlich verminderten Herstellkosten und deutlich vereinfachter Herstellung und Handhabung sowie (insbesondere in den Ausführungsformen (B) und deren bevorzugten Varianten) geringem Innenwiderstand. Als Ladungsträger eignet sich jedes bekannte Kathoden- und Anodenmaterial mit einer bevorzugten durchschnittlichen Korngrößenverteilung von (ungefähr) 1 nm (Nanometer) bis (ungefähr) 500 µm (Mikron). Als Trägerflüssigkeit eignen sich alle für diese Anwendung bekannten Flüssigkeiten bzw. Elektrolyte. In diesem Sinne sind erfindungsgemäß an sich bekannte statische Energiespeicher, wie beispielsweise Akkus und Kondensatoren, als nicht-statisches System ausgebildet, in welchem die Speicherung der elektrischen Energie in einem flüssigen, bevorratbaren, tankfähigen und durch Pumpen stets neu zuführbaren Speichermedium stattfindet.

Die Erfindung wird in der vorliegenden Beschreibung und in den Ansprüchen definiert, die hier durch Bezugnahme aufgenommen werden.
1. Die Erfindung betrifft insbesondere
2. Reversibles Speichersystem für elektrische Energie, umfassend eine ladungszu- oder -ableitende Fläche als Plus-Pol-Kollektor (10) und eine ladungszuoder -ableitende Fläche als Minus-Pol-Kollektor (11) und eine Durchflusselektrode (3, 4) mit einer pumpfähigen Dispersion, die elektrische Energie kapazitiv und/oder chemisch speichernde Partikeln beinhaltet, wobei diese Partikel eine durchschnittliche Korngrößenverteilung von 1 nM bis 500 µm aufweisen, und mindestens eine Zuleitung und mindestens eine Ableitung für die pumpfähige Dispersion aufweist, in Kombination mit einer Gegenelektrode, die ebenfalls als Durchflusselektrode ausgeführt ist, wobei das Speichersystem weiter zur Trennung der Plus- und Minus-Pol-Kollektoren mindestens einen nichtleitenden Abstandshalter (12) aufweist, wobei ein positives Elektrodenmaterial mit dem Plus-Pol-Kollektor (10) und ein negatives Elektrodenmaterial mit dem Minus-Pol-Kollektor (11) in Berührung steht,
   und wobei je Durchflusselektrode (3,4) eines der besagten positiven oder negativen Elektrodenmaterialien in Form der entsprechenden pumpfähigen Dispersion beinhaltet ist, welches Elektrodenmaterial gemeinsam mit den übrigen Wandbereichen der Durchflusselektrode und
   mit dem entsprechenden Plus-Pol-Kollektor (10) oder mit dem entsprechenden Minus-Pol-Kollektor (12),
   und der mindestens einen Zuleitung und der mindestens einen Ableitung eine Kathoden- bzw. Anodendurchflusselektrode (3,4) ausbildet,
   wobei der anliegende Kollektor (10, 11) zur Seite des oder der Abstandshalter (12) hin jeweils nicht für die Partikel der pumpfähigen Dispersion durchlässig sind, jedoch für Elektrolyte durchlässig sind,
   und wobei das positive und das negative Elektrodenmaterial parallel zur Anordnung des oder der Abstandshalter und parallel zueinander, angeordnet sind und auf einander gegenüberliegenden flächigen Seiten der Anordnung des oder der Abstandshalter angeordnet sind derart, dass auf der gleichen Seite der Abstandshalter nur mindestens ein positives Elektrodenmaterial und mindestens ein Plus-Pol-Kollektor und auf der gegenüberliegenden Seite nur mindestens ein negatives Elektrodenmaterial und ein Minus-Pol-Kollektor vorgesehen sind,
   wobei die pumpfähige Dispersion auf einer von der an die Abstandshalter anliegenden flächigen Seite des jeweiligen Kollektors abgewandten Seite angeordnet ist, wobei sie in den jeweiligen Kollektor mindestens teilweise eindringen kann, und
   wobei bei dem besagten Speichersystem optional zusätzlich mindestens ein Behälter, der mindestens eine der pumpfähigen Dispersionen beinhaltet, eine Flüssigkeitstransportvorrichtung und Verbindungsmittel zum Transport der pumpfähigen Dispersion von dem Behälter zu der mindestens einen Zuleitung und von der mindestens einen Ableitung der jeweiligen Durchflusselektrode und zurück zum Elektrolytbehälter vorgesehen sind,
   *dadurch gekennzeichnet,* dass der Minus-Pol-Kollektor und der Plus-Pol-Kollektor eine flächige Gestalt mit einer einzigen äußeren geschlossenen Berandung aufweisen und mit einer ihrer flächigen Seiten jeweils an den oder die Abstandshalter (12) anliegen, und
   die Partikel in einer wasserfreien Elektrolytlösung dispergiert sind,
wobei die ladungsableitenden Kollektoren (10, 11) derart gelöchert oder porös ausgeführt sind, dass die Partikel die einander und dem mindestens eine Abstandhalter (12) zugewandten Seiten der Kollektoren nicht durchdringen können, jedoch die Flüssigkeit der pumpfähigen Dispersion und darin gelöste Ionen, und wobei zur Trennung der Plus- und Minus-Kollektoren (10,11) ein oder mehrere nicht Leitende Abstandshalter (12) vorgesehen sind, die Lücken aufweisen, die mit Elektrolyt gefüllt sind.

Die mindestens eine Durchflusselektrode (Kathoden- oder Anodenkammer) in Kombination mit einer Gegenelektrode, die vorzugsweise ebenfalls als Durchflusselektrode ausgeformt ist, bilden gemeinsam eine erfindungsgemäße Durchflusszelle.

Die Ladungs/Stromabgabe bzw. Stromaufnahme kann in an sich bekannter Weise unter Zirkulation der flüssigen, pumpfähigen Dispersionen (Medien) vom Elektrolytbehälter zur Durchflusszelle und zurück zum Elektrolytbehälter erfolgen.

Eine besondere Ausführungsform (C) der Erfindung (B) betrifft ein derartiges Energiespeichersystem, dadurch gekennzeichnet, dass es mindestens eine Kathodendurchflusselektrode und mindestens eine Anodendurchflusselektrode aufweist, also mindestens (oder vorzugsweise) zwei Durchflussekektroden und mindestens zwei unterschiedliche pumpfähige Dispersionen. Der Vorteil hiervon ist, dass in den paarweise angeordneten Durchflusselektroden die frische Zufuhr unverbrauchter (mindestens teilweise, vorzugsweise praktisch vollständig "geladener") pumpfähiger Dispersion möglich ist.

Die Ausführungsformen (B) und insbesondere (C) betreffen ein derartiges Speichersystem, welches zur Trennung der Plus- und MinusPol-Kollektoren mindestens einen nichtleitenden Abstandshalter aufweist, die vorzugsweise Lücken aufweisen, die mit Elektrolyt gefüllt sind.

Eine flächige Gestalt mit einer einzigen äußeren (in sich) geschlossenen (zusammenhängenden) Berandung bedeutet insbesondere eine annähernd oder vollständig ebene, aber auch eine von der völlig ebenen Form abweichende, z.B. wellenförmige, Poren beinhaltende, Kanäle beinhaltende, Biegungen aufweisende, Knicke aufweisende, oder mit zwei oder mehr dieser Merkmale ausgestattete) Gestalt. Es handelt sich also mit anderen Worten insbesondere um eine (im wesentlichen) flächenartige, einfach berandete Gestalt. Flächig bedeutet insbesondere, es zwei zueinander senkrechte Achsen parallel zur größten Flächenausdehnung gibt, deren Länge jeweils im Verhältnis zur durch diese beiden Achsen senkrechten Dicke des jeweiligen Kollektors (Bruttodicke über alle denkbaren Ausformungen wie Wellen und dergleichen) bei 3 oder mehr zu 1, vorzugsweise bei 5 oder mehr zu 1, insbesondere bei 10 oder mehr zu 1, liegt.

Die Partikel haben in allen vorgenannten Ausführungsformen der Erfindung eine durchschnittliche Korngrößenverteilung von 1 nM bis 500 µm, vorzugsweise von 1 nM bis 1 µm, insbesondere von 1 nM bis 250 nm, vor allem von 1 nM bis 100 nm.

Die Partikel können nach den für nanoskalige Partikel üblichen Verfahren hergestellt werden. Ohne abschließend aufzuzählen, können zu den Verfahren beispielsweise Hochenergie-Kugelmahlen, Kryomahlen, Attrition, Severe Plastic Deformation (SPD), Equal Channel Angular Pressing (ECAP), Multi-axis-forging, (Hoch-) Druck-Torsion, Walzen, oder "Bottom up" elektrolytische Abscheidung, Spark Plug Sintering (SPS), mechanisches Legieren oder heißisotaktisches Pressen gezählt werden. Daneben kommen Verfahren wie Cyclic Extrusion Compressing oder Accumulative Roll-Bending (ARP) in Betracht. Porenfreie nanostrukturierte Partikel können beispielsweise durch SPD, Kristallisation aus amorphem Polymer oder Elektrolytische Abscheidung erhalten werden. Wichtige Verfahren sind auch Chemical Vapor Deposition (CVD), Pulsed Laser Vaporisation (PLV), Carbon Arc Synthesis (CA) und Sol-Gel-Verfahren.

Die mittlere Korngrößenverteilung kann durch Korngrößenanalyse nach üblichen Methoden ermittelt werden, wie mit der Streuung von Laserlicht an den Partikeln, die in Abhängigkeit von der Partikelgröße variiert, oder mit Digitaler Bildverarbeitung oder Elektronenmikroskopie, oder indem man Partikel in einer Wassersäule absetzen lässt (grobe Partikel fallen schneller als feine) und regelmäßig die Dichte der Suspension bestimmt (mit Hilfe eines Aräometers) oder die Masse der abgesetzten Partikel bestimmt (Sedimentwaage). Die Zahlen für die Korngrößenverteilung geben den Mittelwert an.

Pumpfähig bedeutet insbesondere bei Anwendungstemperatur (z.B. im Bereich von - 50 oder -20 bis + 100 oder + 60 °C) flüssig. Bevorzugt ist ein Druck von 1 bis 3 bar.

Die pumpfähigen, vorzugsweise flüssigen (als Flüssigkeit vorliegenden) Dispersionen, welche die die elektrische Energie (kapazitiv und/oder chemisch) speichernde Partikeln beinhalten, liegen jeweils als Dispersion (insbesondere Suspension) vor, wobei jeweils die positiv geladenen und die negativ geladenen Partikel in einem flüssigen Trägermaterial dispergiert ist. Bei der Herstellung dieser Dispersionen ist es wichtig, die Agglomerate der Festbestandteile (insbesondere der Partikeln) derart zu benetzen, dass die einzelnen Teilchen unabhängig voneinander und stabil verteilt sind. Hierfür werden vorzugsweise an sich bekannte Netz- und/oder Dispergiermittel verwendet. Ziel ist es, eine homogene Dispersion ohne Agglomerate, mit feiner Partikelverteilung und guter Lagerstabilität, ohne Sedimentation der festen Bestandteile zu erhalten.

Vorzugsweise können diese Dispersionen hergestellt werden durch Mischung von Elektrolytlösung und erforderlichenfalls den Netz- und/oder Dispergiermitteln nach dem Rotor/Stator-Prinzip, oder durch Homogenisieren mit einem Spalthochdruckhomogenisator. Dabei ist es wichtig, eine möglichst feine Verteilung der Partikel zu erzielen. Dispergier- und Netzmittel sind geeignete, dem Fachmann bekannte Substanzen, welche an die Partikel "andocken" und sie gegen Agglomeration schützen, wie auch Stoffe, welche in der flüssigen Phase eine (z.B. gel- oder netzartige, auch thixotrope Sol/Gel) Struktur erzeugen, so dass eine Sedimentation der Feststoffe verhindert wird.

Bei der (bevorzugten) Nutzung der chemischen Energiespeicherung (elektrochemisches Prinzip, Prinzip der Akkumulatoren) werden für die pumpfähige Dispersion Partikel geeigneter Größe aus an sich üblichen Anoden- bzw. Kathodenmaterialien vorgesehen. Beispielsweise können als Kathodenmaterialien und Anodenmaterialien solche wie in DE 697 22 258 T2 oder DE 10 2007 061 618, die hier durch Bezugnahme hinsichtlich der Materialien aufgenommen werden, vorgesehen sein, oder andere der nachfolgend genannten Materialien:

Positive Elektrodenmaterialien (Kathodenmaterialin), d.h. positiv zu ladende oder geladene Ladungsträger, sind an sich bekannt. In der Regel kann jedes bekannte Kathodenmaterial verwendet werden, wie es beispielsweise in Blei-, Nickel-Cadmium-, Nickel-Metallhydrid-, Nickel-Eisen-, Silber-Zink-, oder Lithium-Akkumulatoren eingesetzt wird. Ebenso können kapazitative Ladungsträger, wie beispielsweise Eisen, Aluminium, Kupfer, Tantal, Niob, Legierungen mit ein oder mehreren davon und/oder Oxide der genannten Metalle oder Legierungen, oder Graphit oder modifizierte Kohlenstoffe verwendet werden, wie sie in dem Fachmann an sich bekannter Weise für Kondensatoren zum Einsatz kommen.

Bevorzugte Kathodenmaterialien, d.h. positiv geladene Ladungsträger, sind beispielsweise Lithium-Metalloxide; wie Lithium-Kobalt-Dioxid (LiCoO₂), Lithium-Nickel-Dioxid (LiNO₂), der Spinell Lithium-Mangan-Oxid (LiMn₂O₄), Lithium-Nickel-Cobalt-Aluminium-Oxid, Lithium-Nickel-Cobalt-Mangan-Oxid, Lithium-Eisen-Phosphat, mit Li-Phosphatglas beschichtete Nanokügelchen von Lithium-Eisen-Phosphat, Schwefel in Graphit eingelagerter Schwefel, Natrium, Natrium-Lithium und/oder Natrium-Kalium. Diese Kathodenmaterialien können auch in Mischungen von zwei oder mehr insbesondere der genannten Materialien zum Einsatz kommen, oder als Beschichtung eines ansonsten vorzugsweise inerten Materials, wie z.B. feinpatikuläre Kohle. Derartige Materialien sind dem Fachmann bekannt.

Beispielsweise kann das Kathodenmaterial LiCiO₂, LiNO₂, LiMnO₂, Lithium-Eisenoxid oder dergleichen, oder Mischungen von zwei oder mehr davon, in Partikelform (auch nur als Außenschicht entsprechender Partikel, die einen anderen Kern beinhalten können) beinhalten.

Negative Elektrodenmaterialien (Anodenmaterialien), d.h. negative Ladungsträger, sind ebenfalls an sich bekannt. In der Regel kann jedes bekannte Anodenmaterial verwendet werden, wie es beispielsweise in Blei-, Nickel-Cadmium-, Nickel-Metallhydrid-, Nickel-Eisen-, Silber-Zink- oder Lithium-Akkumulatoren eingesetzt wird, wie beispielsweise Eisen, Aluminium, Kupfer, Tantal, Niob, Legierungen mit ein oder mehreren davon und/oder Oxide der genannten Metalle oder Legierungen, oder Graphit, modifizierte Kohlenstoffe oder Aktivkohle, wie diese wie sie in dem Fachmann an sich bekannter Weise für Kondensatoren zum Einsatz kommen.

Bevorzugte Anodenmaterialien sind Graphit und/oder Silizium, deren Modifikationen, Lithium-Titanat (Li₄Ti₅O₁₂), nanostrukturiertes Li-Titanat, und/oder Lithium. Diese Kathodenmaterialien können auch in Mischungen von zwei oder mehr insbesondere der genannten Materialien zum Einsatz kommen, oder als Beschichtung eines ansonsten vorzugsweise inerten Materials. Derartige Materialien sind dem Fachmann bekannt. Die Partikel können derart als reine Verbindungen vorliegen oder aus Mischungen von Materialien bestehen, beispielsweise auch mit einem inerten leitenden oder nichtleitenden Material, welches mit einer der genannten Verbindungen oder Metalle beschichtet ist. Besonders bevorzugt ist ein Silizium/SiOₓ/Kohlenstoff-Komposit, wie beispielsweise beschrieben in DE 10 2007 061 618 A1.

Das Anodenmaterial kann beispielsweise metallisches Lithium, Indium-Lithium-Legierung, Lithium-Aluminium-Legierung, Graphit, Si/SiO₂/C-Nanokomposite oder Lithiumeisenphosphat auf feinpartikulärem Kohlenstoff, oder dergleichen beinhalten, oder Mischungen von zwei oder mehr davon.

Die Partikel werden jeweils in einer -wasserfreien - Elektrolytlösung dispergiert.

Als Trägermaterial für die Herstellung der Kathodenflüssigkeit bzw. Anodenflüssigkeit kann jede Flüssigkeit verwendet werden, welche als Elektrolytlösung beispielsweise in Blei-, Nickel-Cadmium-, Nickel-Metallhydrid-, oder Lithium-Akkumulatoren, oder beispielsweise auch in Elektrolytkondensatoren oder Doppelschichtkondensatoren, eingesetzt wird. Diese sind dem Fachmann an sich bekannt.

Als Lösungsmittel können beispielsweise aprotische Lösungsmittel, wie cyclische Carbonate, wie Alkylencarbonate, wie Ethylencarbonat oder Propylencarbonat, Dialkylcarbonate, wie Dimethylcarbonat, Ethylmethylcarbonat, Nitrile, wie Acetonitril oder 3-Methoxyproprionitril, Dimethoxyethan, Diethoxyethan, Tetrahydrofuran, 2-Methyltetrahydrofuran, gamma-Butyrolacton, oder Dioxolan, oder Gemische von zwei oder mehr davon, vorgesehen sein.

Die pumpfähigen Dispersionen (Kathodenflüssigkeit oder Katholyt, Anodenflüssigkeit oder Anolyt) stellen im Falle der (mindestens in erster Linie) chemischen Energiespeicherung jeweils eine Elektrolytlösung dar, enthaltend das flüssige Trägermaterial, in welchem ein Elektrolyt gelöst ist. Als Elektrolyte, wie Salze, können darin Lithiumperchlorat, Lithiumhexafluorphosphat (LiPF₆) (bevorzugt), Lithiumhexafluoroarsenat, Lithiumtetrafluorborat ((LiBF₄) (bevorzugt), LiCF₃SO₃, Methid, LiN(CF₃SO₂) oder Lithiumborat, oder Mischungen von zwei oder mehr davon, insbesondere der als bevorzugt gekennzeichneten, vorgesehen sein.

Die flüssigen, pumpfähigen Medien, bestehend aus der Kathodenflüssigkeit und der Anodenflüssigkeit, bilden jeweils (separat oder bei Mischungen gemeinsam) eine Dispersion, welche jeweils den positiv geladenen oder zu ladenden bzw. den negativen oder negativ zu ladenden Ladungsträger in dem flüssigen Trägermaterial dispergiert enthalten (enthalten = beinhalten), wobei dieses Trägermaterial insbesondere eine Elektrolytlösung darstellt. Für die Herstellung dieser Dispersion verwendet man vorzugsweise ein Netz- oder Dispergiermittel. Als solches ist oder sind beispielsweise verwendbar: Alkylbenzolsulfonate, pyrogene Kieselsäuren, modifizierte Kieselsäuren, modifizierte Phosphatidylcholine, Lecithine und/oder Membranlipid, oder andere dem Fachmann bekannte Materialien, wie auch Mischungen von zwei oder mehr derartigen Materialien.

Die als pumpfähige Dispersion vorgesehenen positiven und/oder negativen Elektrodenmaterialien bilden jeweils eine Dispersion mit den entsprechenden Ladungsträgern als oder als Bestandteil von Partikeln. Dabei ist das Gewichtsverhältnis von dispergierten Partikeln zu (":") flüssigem Trägermaterial (z.B. Elektrolytlösung) nicht kritisch. Im Prinzip kann jedes Verhältnis gewählt werden, jedoch ist eine möglichst hohe Energiedichte der Dispersionen anzustreben. Andererseits sollten die Dispersionen gut fließfähig sein und die Partikel sollten bei längerer Lagerung nicht sedimentieren. Beispielsweise kann ein Gewichtsverhältnis von Partikel : Trägerflüssigkeit von 1 : 99 bis 80 : 20, vorzugsweise ein Gewichtsanteil der Partikeln von 30 bis 90, insbesondere von 60 bis 80, Gew.-% vorgesehen sein, bezogen auf das Gesamtgewicht der Dispersion (positives oder negatives Elektrodenmaterial).

Bei Vorhandensein einer festen Elektrode statt einer Durchflusselektrode können auch feste leitfähige amorphe Elektrolyte verwendet werden, z.B. dargestellt aus 0,6Li₂S-O, 4SiS₂ oder Feststoffelektrolyte wie Li₃PO₄-Li₂S-SiS₂, LiJ- Li₂S- B₂S, Li₂S-P₂S₆ oder LiJ-AlO₃, oder Mischungen von zwei oder mehr davon, verwendet werden.

Bei Nutzung der rein kapazitiven Energiespeicherung werden die Partikeln unterschiedlich geladen, beispielsweise erste Partikel anders als zweite Partikel. Beispielsweise können erste (z.B. Aluminium-) Partikel mit einem ersten mittleren Korndurchmesser, beispielsweise von 50 µm in einem nichtleitenden Medium, wie dünnflüssigem Paraffinöl oder einem der Lösungsmittel für Elektrolytlösungen ohne Elektrolytzusatz, dispergiert werden und im Falle der Verwendung entgegengesetzt geladener Partikeln getrennt davon beispielsweise zweite (z.B. auch Aluminium-) Partikel mit einem zweiten, vom ersten abweichenden mittleren Korndurchmesser, beispielsweise von 300 µm in einem nichtleitenden Medium, wie dünnflüssigem Paraffinöl, dispergiert werden. Geeignete Stabilisatoren für die Dispersion können zugesetzt sein.

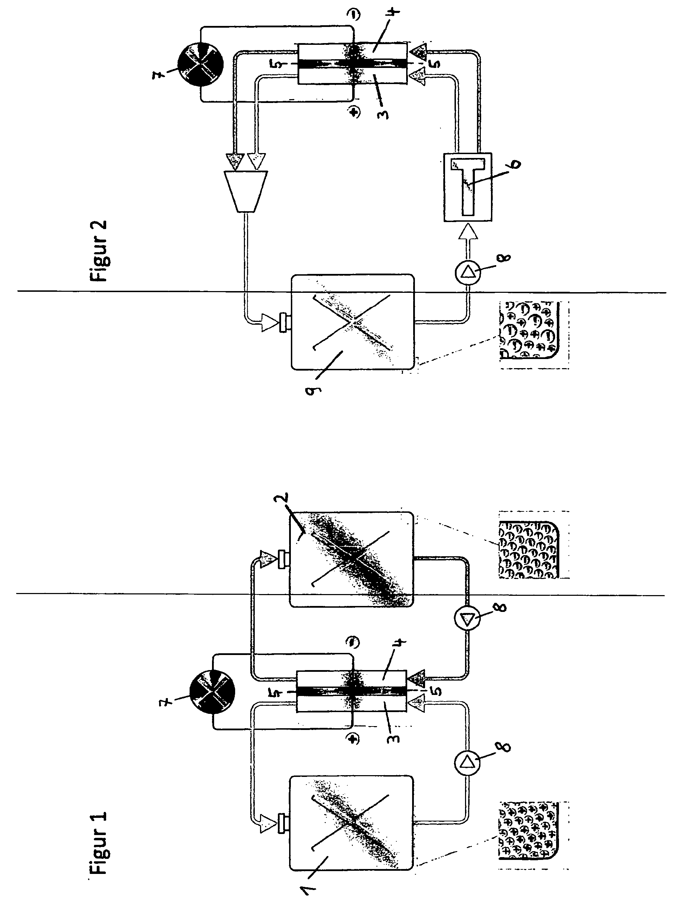

Wird nun beispielsweise die Dispersion mit den ersten (beispielsweise 50 µm-) Partikeln durch die eine Durchflusselektrode eines erfindungsgemäßen Energiespeicher-systems mit zwei entgegengesetzt geladenen/zu ladenden Durchflusselektroden, welche mit dem Minuspol einer elektrischen Stromquelle verbunden ist, und die Dispersion mit den zweiten (z.B. 300 µm-) Partikeln durch die andere Durchflusselektrode geleitet, welche mit dem Pluspol einer elektrischen Stromquelle verbunden ist, so laden sich die beiden Dispersionen unterschiedlich auf. Beide unterschiedlich geladenen Dispersionen können getrennt aufbewahrt (vgl. Fig. 1) oder unmittelbar nach dem Verlassen der Durchflusszelle vermischt werden (vgl. Fig. 2), ohne dass es zu einem quantitativen Ladungsaustausch zwischen den Teilchen kommt. Wird nun die Mischung zwecks Ladungsentnahme wieder einem erfindungsgemäßen Energiespeichersystem zugeführt, müssen die Partikel vor Eintritt in die jeweiligen Durchflusselektroden wieder getrennt werden, so dass die Partikel mit der ersten Korngrößenverteilung durch Durchflusselektrode und die Partikel mit der zweiten Korngrößenverteilung durch die andere Durchflusselektrode geleitet werden, um dort bei Berührung mit den leitenden Flächen ihre Ladungen wieder abgeben zu können. Diese Trennung der Partikel kann durch ihre unterschiedliche Größe und/oder unterschiedliche Trägheit einfach durchgeführt werden, wie nachfolgend für Ausführungsform (D) der Erfindung beschrieben. Werden die Partikeln nicht gemischt und getrennt, sondern separat aufbewahrt und zugeführt, können die Partikeldurchmesser auch identisch sein.

Es ist auch möglich, dass die chemische Speicherung der elektrischen Energie (beispielsweise nach dem Akku-Prinzip wie insbesondere nachfolgend beschrieben) mit der Speicherung von elektrischer Energie nach kapazitiven Prinzipien, z.B. dem Prinzip des Doppelschichtkondensators, kombiniert wird, indem sich die bekannten Doppelschichten um die kathodischen und/oder anodischen Partikel in den pumpfähigen Dispersionen ausbilden.

Vollständig trennbar sind kapazitive und elektrochemische Beiträge zur Energiespeicherung und -Abgabe bei den erfindungsgemäßen Systemen oft nicht, so dass Nennung eines Beitrages nicht zwingend bedeutet, dass nicht auch der andere mindestens eine gewisse Rolle spielt.

Es sei angemerkt, dass die Bezeichnung von "Kathode" und "Anode" in der vorliegenden Erfindungsoffenbarung auf der Konvention beruht, dass im geladenen Zustand Elektronen an einen äußeren Stromkreis abgebende Materialien (negativer Pol) als Anoden/anodisch bezeichnet werden, während elektronenaufnehmende Materialien (positiver Pol) als Kathoden/kathodisch bezeichnet werden, da bei Aufladung Anionen (z.B. Li⁺, das beim Aufladen zu Li entladen wird) zur Anode wandern, Kationen zur Kathode.

"Positiv" oder "negativ" bedeutet jeweils die Ladung im aufgeladenen Zustand relativ zur jeweiligen Gegenelektrode.

Noch eine weitere Ausführungsform (D) der Erfindung betrifft ein positives Elektrodenmaterial (Katholyt oder Kathodenflüssigkeit) oder ein negatives Elektrodenmaterial (Anolyt oder Anodenflüsigkeit), welches die jeweils entsprechenden (entsprechend geladenen oder ladbaren) Partikel (Ladungsträger) in einem flüssigen Trägermaterial dispergiert enthält, wobei die Partikel eine durchschnittliche Korngrößenverteilung von 1 nM bis 1 µm, insbesondere von 1 nM bis 250 nm, vor allem von 1 nM bis 100 nm aufweisen.

Die entsprechenden pumpfähigen Dispersionen können getrennt von den Dispersionen der jeweils entgegengesetzten (relativen) Ladung in Tanks oder Kammern in Tanks aufbewahrt werden. Sie können jedoch auch in einem Tank zu einer Dispersionsmischung vermischt werden, wenn durch eine geeignete Oberflächenbeschichtung (Coating) und/oder durch geeignete Dispersionshilfsmittel (beispielsweise solche, die eine Thixotropie bewirken) ein Ladungsaustausch innerhalb der Dispersionsmischung verhindert wird. Geeignete Dispersionshilfsmittel zur Verhinderung eines Ladungsaustausches können beispielsweise Tenside oder strukturbildende Komponenten sein, insbesondere modifizierte Kieselsäuren und/oder Alkylbenzolsulfonate. Diese grenzflächenaktiven Stoffe bedecken die Oberfläche eines jeden elektrisch geladenen Partikels, so dass beispielsweise ein Ladungsaustausch zwischen zwei benachbarten Partikeln mit unterschiedlicher elektrischer Ladung nur durch Überwindung von zwei Schutzschichten erfolgen kann. Wenn die Partikel jedoch in der jeweiligen Durchflusselektrode gezielt mit den leitenden Flächen der Elektroden in Berührung gebracht werden, ist jeweils immer nur eine Schutzhülle zu überwinden, sodass eine Ladungsaufnahme bzw. Ladungsabgabe stattfinden kann.

Auch eine Mischung aus einem positiven und einem negativen Elektrodenmaterial, welches eine Mischung der jeweils entsprechenden Partikel (Ladungsträger) in einem flüssigen Trägermaterial dispergiert enthält, ist möglich, wobei die Partikel eine durchschnittliche Korngrößenverteilung von 1 nM bis 1 µm, insbesondere von 1 nM bis 250 nm, vor allem von 1 nM bis 100 nm aufweisen, und ein Coating (Beschichtung) oder ein Dispersionshilfsmittel, insbesondere wie im letzten vorstehenden Absatz genannt, beinhaltet ist.

Vorzugsweise werden Anoden- und Kathodenflüssigkeit separat voneinander hergestellt und gelagert (Ausführungsform (D)). Es ist jedoch nach Ausführungsform (E) auch möglich, die Kathoden- und Anodenflüssigkeit getrennt als Dispersion herzustellen, anschließend zu mischen und dann zu lagern. Weiter ist es möglich, die Kathoden- und die Anodenflüssigkeit als Dispersion direkt im Gemisch herzustellen und zu lagern. Hierbei ist zu beachten, dass das Netz- oder Dispergiermittel und die Menge des zugesetzten Netz- oder Dispergiermittels eine genügende Trennung der positiv geladenen und negativ geladenen Teilchen sicherstellt, um einen Ladungsaustausch innerhalb der Dispersion zu verhindern. Haben beispielsweise Anoden- und Kathodenpartikel deutlich unterschiedliche Durchmesser, so lassen sie sich relativ leicht trennen, bevor sie in die Durchflusselektroden ein bzw. diese durchfließen. Nach der Lade- oder Entladevorrichtung können beide Dispersionen wieder zusammenfließen und in einem Tank aufbewahrt werden.

Die Trennung der dispergierten Anoden-Partikel von den dispergierten Kathoden-Partikeln kann durch unterschiedliche, an sich bekannte Trennmethoden erfolgen. Sie können beispielsweise durch unterschiedliche Größe, Dichte oder magnetische Eigenschaften voneinander getrennt werden.

Liegen die positiven und negativen Elektrodenmaterialien als Gemisch vor, so ist es wichtig, dass die entsprechenden beiden Partikeltypen, bevor sie der Durchflusszelle zugeführt werden, sich in mindestens einem der folgenden Parameter unterscheiden: (i) unterschiedliche Größe, (ii) unterschiedliche Dichte und/oder (iii) unterschiedliche ferromagnetische Eigenschaften.

Geeignete Trenntechniken und -vorrichtungen sind beispielsweise mit entsprechenden Sieben, Hydrozyklotronabscheidern oder Magnetabscheidern (wenn die Partikeln ferromagnetische Eigenschaften haben) oder anderen Techniken, wie sie auch in analytischen Geräten zum Einsatz kommen, dem Fachmann bekannt.

Ein erfindungsgemäßes Speichersystem umfasst dann zusätzlich eine entsprechende Teilchentrenneinheit, welche vor Zuführung zu der Anoden- und der Kathodendurchflusselektrode die Trennung der entsprechenden Elektrodenmaterialien ermöglicht.

In einer weiteren Ausführungsform der Erfindung kann die Teilchentrenneinheit mit den Durchflusselektroden kombiniert vorgesehen sein. Dabei erfolgt in der kombinierten Vorrichtung sowohl die Trennung als auch die Ladungsaufnahme oder -abgabe, indem die Plus- und Minus-Pol-Kollektoren als Kontaktflächen der Elektroden in der Trennvorrichtung angebracht sind. Derart schlagen sich beispielsweise die Partikel in einem Zyklonabscheider auf Grund unterschiedlicher Dichte, Trägheit und/oder Größe in unterschiedlichen Bereichen der Teilchentrenneinheit nieder, in welcher gleichzeitig der Ladungsaustausch stattfindet. Separate Durchflusszellen mit Durchflusselektroden und eine ionenpermeable Membran oder Abstandhalter sind somit nicht erforderlich.

Noch eine weitere Ausführungsform (F) der Erfindung betrifft ein Verfahren zur Abgabe elektrischer Energie, bei dem mindestens eines, vorzugsweis mindestens ein Paar der entgegengesetzt geladener Elektrodenmaterialien in Form der pumpfähigen Dispersion, die elektrische Energie (kapazitiv und/oder chemisch) speichernde Partikeln beinhaltet, kontinuierlich und/oder diskontinuierlich durch mindestens eine der Durchflusselektroden, vorzugsweise mindestens ein Paar der entgegengesetzt geladen vorgesehenen Durchflusselektroden, befördert (z.B. gepumpt) wird und die Ladung durch den oder die zugehörigen Plus- und/oder Minus-Pol-Kollektoren abgeleitet wird. Hierbei kann vorgesehen sein, dass die positiv und/oder negativ geladenen Elektrodenmaterial(ein) als Mischung entgegengesetzt geladener Partikeln verwendet werden, die vor dem Durchleiten durch die entsprechenden Durchflusselektroden durch eine Teilchentrenneinheit, wie oben beschrieben, getrennt werden. Die Partikel geben ihre Ladung über die Plus- bzw. Minus-Pol-Kollektoren ab. Der abgeleitete Strom kann dabei an einen oder mehrere Stromverbraucher abgegeben werden.

Zur Ladung kann umgekehrt als ein Verfahren vorgesehen sein, bei dem, in umgekehrter Polung zur Ausführungsform (F), mindestens eines, vorzugsweis mindestens ein Paar der entgegengesetzt geladener Elektrodenmaterialien in Form der pumpfähigen Dispersion, die elektrische Energie (kapazitiv und/oder chemisch) speichernde Partikeln beinhaltet, kontinuierlich und/ oder diskontinuierlich durch mindestens eine der Durchflusselektroden, vorzugsweise mindestens ein Paar der entgegengesetzt geladen vorgesehenen Durchflusselektroden, befördert (z.B. gepumpt) wird und die Ladung durch den oder die zugehörigen Plus- und/oder Minus-Pol-Kollektoren aus einer Stromquelle zugeleitet wird. Hierbei werden die Partikel geladen. Sie können zwecks Ladungsentnahme/-abgabe der oder den Durchflusselektroden zugeführt werden nach dem als Ausführungsform (F) genannten Verfahren.

Vorteilhaft erfolgt die Zufuhr der Dispersionen bei den erfindungsgemäßen Verfahren unter Druck, beispielsweise von 1 bis 3000 bar, z.B. von 100 bis 1000 bar, oder von 1 bis 20 bar, durch die vorzugsweise mit porösen Materialien als ableitende Kollektoren ausgestatteten bestückten Durchflusselektroden der erfindungsgemäßen Energiespeichersysteme in Form von Durchflusszellen gepresst, um möglichst hohe Scherkräfte und möglichst hohen Kontakt der Partikel mit den Kollektoroberflächen in den Durchflusselektroden zu gewährleisten. Die Flüssigkeitstransportvorrichtung(en) (z.B. Pumpe(n)) kann (können) auch nach den Durchflusselektroden vorgesehen sein, so dass ein gewisser Unterdruck entstehen kann.

Die Dispersion(en) kann (können) beispielsweise (insbesondere im Falle von aus Kathoden/Anodenflüssigkeitsmischungen durch Trennung erhältlichen Partikeln) mit Druck durch einen schmalen Spalt gepresst werden und dann auf die zu- oder ableitenden Flächen (Plus- oder Minus-Pol-Kollektor) mit großer Geschwindigkeit aufprallen, ähnlich wie in einem Spalthochdruck-Homogenisator. Auch Ultrabeschallung kann vorgesehen sein. Durch die in beiden Fällen auftretenden Kavitationen brechen an der Oberfläche der Partikel haftende Filme (z.B. von Netz- oder Dispergiermitteln oder Helmholtz-Doppelschichten) kurzzeitig auf, so dass es zum direkten Kontakt mit der leitenden Fläche kommt. Dies ist besonders wichtig, wenn gut haftende Dispergiermittel eingesetzt werden. Es reicht jedoch in der Regel, wenn die Dispersion an einer leitenden Fläche mit einem gewissen Druck zwangsweise entlanggeführt wird, so dass möglichst viele Partikel in Kontakt mit der leitenden Oberfläche kommen, um deren Ladungen abzugeben bzw. aufzunehmen. Aufgeraute Flächen ähnlich den Flächen eines Wärmeaustauschers, hergestellt aus elektrisch gut leitenden Materialien, wie beispielsweise Kupfer oder Aluminium, können den Kontakt verbessern.

Ladungszu- oder -ableitende Flächen als Plus-Pol-Kollektor und eine ladungszu- oder -ableitende Fläche als Minus-Pol-Kollektor bedeutet, dass die entsprechenden Flächen beim Aufladen der Partikeln ladungszuleitend wirken, beim Abgeben der Energie ladungsableitend. Die entsprechenden Kollektoren können beispielsweise mit geeigneten Stromleitern, wie Drähten, verbunden sein (formschlüssig, kraftschlüssig oder stoffschlüssig) oder anderweitig an Stromkreise mit Verbrauchern, wie Elektromotoren etc." angeschlossen sein, ohne dass dies jedes Mal erwähnt wird..

Die Materialien für die Plus- und/oder Minus-Pol-Kollektoren können im Falle von Durchflusselektroden derart ausgestaltet sein, dass sie nur auf einer ihrer Außenflächen mit den jeweiligen geladenen Partikeln in Berührung kommen, oder sie können derart porös oder beispielsweise mit Kanälen ausgestattet sein, dass sie von der jeweils zugehörigen pumpfähigen Dispersion teilweise (da eine der Seiten für die Partikel undurchlässig sein muss wegen des mindestens einen Abstandshalters statt einer ionenpermeablen Membran) durchdrungen sind, wobei die Poren ansonsten für die Partikeln durchlässig sein müssen, um volle Ausnutzung der Oberflächen zu ermöglichen. Insbesondere dann können die Kollektoren als die jeweilige Durchflusselektrode teilweise ausfüllende Elemente ausgeführt sein, insbesondere aus Metallschäumen, gesintertem Metallpulver oder feinen gesinterten Kügelchen, z.B. aus Kupfergranulat, aus einem Fasergeflecht, beispielsweise aus Kupfer-, Aluminium- oder Graphitfasern, aus durch Ätzen oder anderweitig hergestellten Metallschwämmen, z.B. aus Aluminium, oder aus mit einem elektrisch leitenden Material, wie einem Metall, z.B. mit Kupfer oder Aluminium, beschichtetem organischem oder keramischem Material bestehen, mit guter teilweiser Durchlässigkeit für die pumpfähigen Dispersionen, vorzugsweise einem offenporigen Material, wie in EP 1 808 241, die hier durch Bezugnahme diesbezüglich inkorporiert wird. Dies erhöht die Oberfläche und somit die mögliche Stromstärke, die mit einem entsprechend ausgestatteten erfindungsgemäßen Energiespeichersystem erzielt werden kann.

Eine besondere Ausführungsform der Erfindung betrifft ein erfindungsgemäßes Energiespeichersystem, bei dem der oder die (Plus- und/oder Minus-Pol-) Kollektoren als Platten aus einem leitfähigen Material, z.B. als Kohle- (z.B: Graphit-) oder Metallplatten (insbesondere aus Aluminium oder vorzugsweise aus Kupfer oder einem anderen geeigneten Metall, wobei jeweils auf einer Seite der betreffenden Kollektorplatte (beispielsweise durch Ausfräsen, Wegätzen oder dergleichen) oberflächenparallele Kanäle (kanalförmige Vertiefungen), die, um eine besonders hohe Oberfläche auszubilden, auch schlangenförmig, mit Kurven oder Knicken oder anders angeordnet (beispielsweise parallel zueinander) sein können, wobei sie beispielsweise von einem im Randbereich des jeweiligen Kollektormaterials vorgesehenen Aussparungsbereich aus für die Zuleitung zugänglich sein können, so dass die pumpfähige(n) Dispersion(en) durch die Kanäle gepumpt werden können, wobei dann die mit einem oder mehreren Kanälen ausgestaltete Fläche des betreffenden Kollektors in einem erfindungsgemäßen Energiespeichersystem derart angeordnet wird, dass die Kanäle der (dann obligatorischen) ionenselektiven Membran zugewandt und durch diese für die pumpfähige(n) Dispersion(en) nach außen abgedichtet werden, so dass (im fertigen Einbauzustand) ein oder mehrere geschlossene Kanäle zur Führung der Elektrodenmaterialien (Dispersion) vorhanden sind.

Dies ermöglicht, dass die jeweilige pumpfähige Dispersion unter hohem Kontakt mit den Oberflächen durch die jeweiligen Kollektoren gepumpt werden kann, bei gleichzeitig sehr vereinfachter Herstellung. Durch entsprechend hohen Druck und/oder hohe Pumpgeschwindigkeit des Elektrodenmaterials kann, insbesondere bei Vorhandensein von Kurven oder Knicken in dem oder den Kanälen, der Kontakt der Partikel der pumpfähigen Dispersion mit der Kanaloberfläche des jeweiligen Kollektors erleichtert werden (Zentrifugal- und Scherkräfte) und so die Effizienz der Energieabgabe erhöht werden, was auch Teil einer besonderen Ausführungsform des erfindungsgemäßen Verfahrens zur Abgabe elektrischer Energie ist.

In einer weiteren besonderen Ausführungsform, insbesondere für die Energiespeicherung nach dem Lithium-Akku-Prinzip, ist vorgesehen, dass die eine Durchflusselektrode mit einem Plus-Pol-Kollektor aus gesintertem Kupfergranulat, wie es beispielsweise von Flüssigkeitsfiltern bekannt ist, die andere Durchflusselektrode mit einem Minus-Pol-Kollektor aus einem offenporigen Metallschaum einer Aluminium-legierung, wie beispielsweise in der (hier diesbezüglich durch Bezugnahme inkorporierten) EP 1 808 241 A1 beschrieben, ausgestattet, insbesondere beinahe vollständig ausgefüllt ist. Hierdurch werden die Oberflächen der Elektroden beträchtlich vergrößert, was einen besseren Kontakt der in den pumpfähigen Dispersionen enthaltenen Partikel mit den Elektroden gewährleistet.

Durch Reihenschaltung (Stapeln, "Stacking") von Durchflusszellen und/oder geeignete Materialien kann die erwünschte Spannung erzielt werden, durch Parallelschaltung für den jeweiligen Zweck geeignete Stromstärken.

Die erzeugte bzw. erzeugbare Energiemenge kann durch die Menge der als pumpfähige Dispersion vorliegenden positiven bzw. negativen Elektrodenmaterialien geregelt werden.

Weitere mögliche übliche Elemente der Energiespeichersysteme der Erfindung, wie beispielsweise Stromleitungen, Dichtungen oder dergleichen, sind für den Fachmann selbstverständlich und werden daher nicht im Einzelnen beschrieben.

Vor- und nachstehend stehend verwendete spezifischere Definitionen allgemeinerer Begriffe können bei jeder der Erfindungsausführungen einzelne, mehrere oder alle allgemeineren Begriffe ersetzen, was zu besonderen, beispielsweise vorteilhaften Ausführungsformen der Erfindung führt.
Figur 1 (Fig. 1) stellt für Referenzzwecke den schematischen Aufbau eines Energiespeichersystems mit getrennter Bevorratung von (in aufgeladenem Zustand) positivem pumpfähigem Elektrodenmaterial (Kathodendispersion) und (in aufgeladenem Zustand) negativem pumpfähigem Elektrodenmaterial (Anodendispersion) im Querschnitt (bei den Behältern (1) und (2) in Aufsicht) dar.
Figur 2 (Fig. 2) stellt für Referenzzwecke den schematischen Aufbau eines Energiespeichersystems mit vermischter Bevorratung von positivem pumpfähigem Elektrodenmaterial (Kathodendispersion) und negativem pumpfähigem Elektrodenmaterial (Anodendispersion) im Querschnitt (bei dem Behälter (9) in Aufsicht) dar.

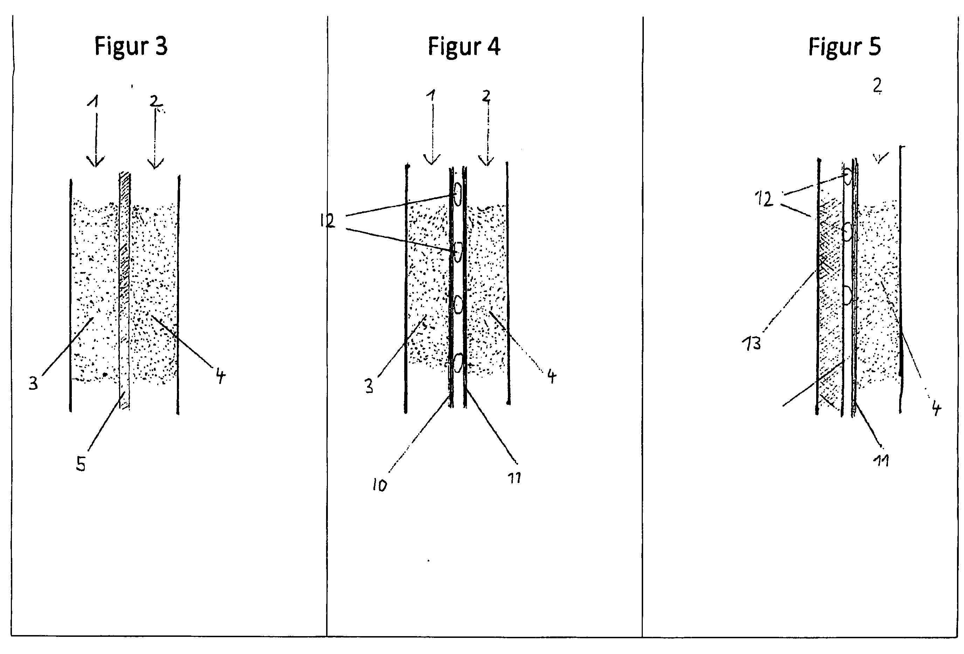

Figur 3 (Fig. 3) zeigt für Referenzzwecke schematisch den vergrößerten Ausschnitt einer Durchflusszelle im Querschnitt, bei der die ableitenden Kollektoren direkt auf der ionenpermeablen (Separator-)Membran aufliegen.
Figur 4 (Fig. 4) zeigt schematisch den vergrößerten Ausschnitt einer erfindungsgemäßen Durchflusszelle im Querschnitt, bei der die ladungsableitenden Kollektoren aus Metallschäumen, die direkt mit ableitenden Kollektoren (z.B. Folien) verbunden sind, bestehen, welche durch Abstandshalter voneinander getrennt sind.
Fig. 5 zeigt schematisch den vergrößerten Ausschnitt eines erfindungsgemäßen Energiespeicher-Systems, bei dem ein Elektrodenmaterial in flüssiger Form, das andere in feststehender (fester) Form vorgesehen ist.

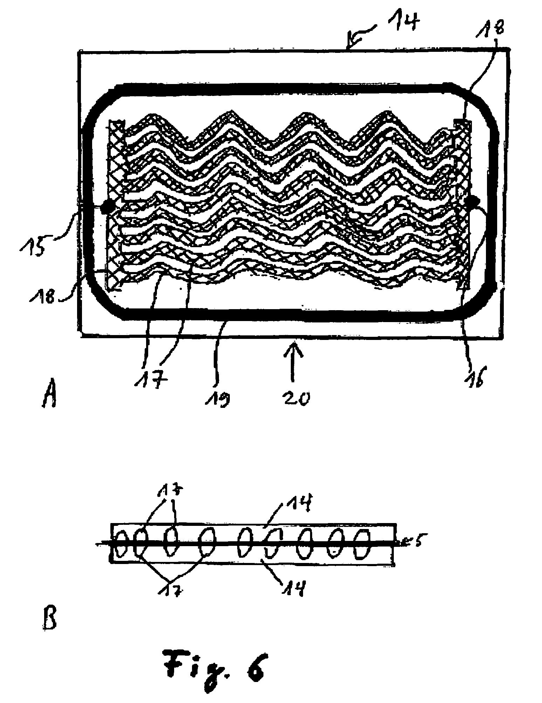

Fig. 6A stellt schematisch ein erfindungsgemäßes Energiespeichersystem mit von Kanälen durchzogenen Kollektoren in Aufsicht dar, wobei unterhalb der Papierebene liegende Abschnitte mit Kreuzschraffur dargestellt sind. Fig. 6B stellt schematisch eine Kombination aus zwei Kollektoren wie in A gezeigt, die auf eine ionenpermeable Membran gelegt sind, dar (Querschnitt in der Richtung des Pfeils in Fig. 6 A).

Die nachfolgenden Beispiele illustrieren die Erfindung, ohne sie einzuschränken.

Beispiel 1: Fig. 1 zeigt ein nur für Referenzzwecke ein Energie-Speichersystem mit getrennter Bevorratung von positivem Elektrodenmaterial (Kathodendispersion) und (in aufgeladenem Zustand) negativem Elektrodenmaterial (Anodendispersion), jeweils in Form einer pumpfähigen Dispersion von Partikeln wie oben erwähnt, im Querschnitt. Das positive und das negative Elektrodenmaterial befinden sich voneinander getrennt in separaten Behältern (1), (2), und werden über Flüssigkeitstransportvorrichtungen (8), hier in Form von Pumpen, die alternativ oder zusätzlich auch hinter der Durchflusszelle mit Anschluss an die Ableitung vorliegen können, und eine Zuleitung einer Durchflusszelle, welche eine Kathodendurchflusselektrode (3), eine Anodendurchflusselektrode (4) und dazwischen eine ionenpermeable Membran (5), welche für Ionen im Elektrolyten in den Elektrodenmaterialien durchgängig ist, jedoch nicht für darin gelöste ladungstragende Partikel. Nicht gezeigt sind den Strom ableitende Plus- und Minus-Pol-Kollektoren (vgl. z.B. (10) und (11) in Fig. 4). In dieser Konfiguration mit geladenen Partikeln dient die Durchflusszelle als Stromquelle.

Nicht gezeigt ist, dass (was auch für die erfindungsgemäßen Ausführungsformen gilt) in einer besonders bevorzugten Ausführungsform der Erfindung die Behälter als Doppeltanks mit fester Außenhülle ausgeführt sein können, die in ihrem Inneren mindestens zwei flexible Innentanks eingelegt enthalten, wobei jeder Innentank einen Be- und Entfüllanschluss (z.B. Be- und Entfüllungsstutzen) aufweist, der am festen, äußeren Tank befestigt sein kann. Jeder.der flexiblen Innentanks ist dabei vom Volumen her mindestens so groß, dass er den gesamten, festen äußeren Tank ausfüllen kann. Wird beispielsweise der eine flexible Innentank mit erfindungsgemäßem/erfindungsgemäß verwendetem geladenem pumpfähigem Elektrodenmaterial gefüllt, so befindet sich der zweite flexible Innentank in einem kollabierten Zustand und nimmt nur wenig Raum ein. Beim Entladevorgang des Systems wird nun das geladene pumpfähige Elektrodenmaterial aus dem Tank gepumpt, gelangt durch die Durchflusszelle, gibt dort seine Ladung (mindestens teilweise) ab und wird dann in den zweiten, flexiblen Innentank gepumpt. Im gleichen Maße, wie der erste (anfangs volle) Innentank mit dem geladenen Elektrodenmaterial geleert wird, füllt sich der zweite, flexible Innentank. Beim Tanken von frischem Elektrodenmaterial wird in gleichem Maße die entladene pumpfähige Dispersion herausgepumpt und kann rezykliert (extern neu geladen und wieder einem Tank zugeführt) werden. Dadurch wird eine Lüftung des Tanksystems unnötig und die Gefahr der Einbringung von Luftfeuchtigkeit und Sauerstoff wird vermieden. Außerdem ist kein zusätzliches Reservoir für "verbrauchtes" (entladenes) Elektrodenmaterial vonnöten. Dieses System von zwei flexiblen Innentanks in einem äußeren Behälter hat zudem den Vorteil, dass es in bestehende Tanks nachträglich eingebaut werden kann.

Der äußere feste Tank kann allgemeiner selbstverständlich ebenfalls durch einen mit flexibler Hülle ersetzt sein. Er muss keine vollständig geschlossene Hülle aufweisen, sondern kann beispielsweise auch zur Materialersparnis durchbrochen ausgeführt sein. Noch allgemeiner kann stattdessen eine Stützvorrichtung für die beiden flexiblen Tanks vorgesehen sein.

Als Materialien für die Innentanks kommen alle gegen die Elektrodenmaterialien resistenten, flexiblen Materialien bzw. Folien in Betracht. Bevorzugt sind polymere Materialien, wie Kautschuk, Silikone, Polyethylene, Polypropylene, Polyamide, oder verwandte organische Polymere. Auch kaschierte oder laminierte Folien können vorgesehen sein. Der Fachmann kennt geeignete Materialien. Die Materialien können auch auf der Innenseite beschichtet sein, beispielsweise mit Metalldampf. Auch Metallbeutel sind möglich, beispielsweise aus Metallfolien.

Durch Anlegen einer Spannung mittels einer Stromquelle (7) können "verbrauchte" ungeladene Partikel wieder geladen werden, dann wird praktisch die Polarisierung umgekehrt und die aufgeladenen Elektrodenmaterialien den Behältern (1) und (2) zugeführt. Dadurch ist reversibles Be- und Entladen möglich und die Durchflusszelle dient abwechselnd als Stromquelle und als Aufladevorrichtung für die Partikel. Doch kann alternativ auch fertig vorgeladenes Elektrodenmaterial der passenden Ladung in die Behälter (1) und (2) eingefüllt (getankt) werden, so dass es möglich ist, rasch erneut Ladung abgebende und zur Stromerzeugung befähigte erfindungsgemäße Energiespeichersysteme zu erhalten. Statt langem Warten zum Aufladen kann so beispielsweise ein Fahrzeug rasch betankt und direkt weiter gefahren werden, analog wie heute bei Benzinfahrzeugen, ohne lange Ladezyklen. Die Dispersionen können dann separat geladen und zum Tanken bereit gehalten werden.

Aus dem Stand der Technik sind derartige Vorrichtungen bekannt, bei denen jedoch die ableitenden Plus- und Minuspolkollektoren (10) und (11) (in Fig. 1 nicht gezeigt) von der ionenpermeablen Membran (5) relativ weit entfernt sind. Dies führt zu erhöhtem Innenwiderstand. Dieses Problem kann vorteilhaft dadurch gelöst werden, dass die ladungsableitenden Plus-Pol-Kollektoren (1) und Minus-Pol-Kollektoren (11) sehr nahe beieinander liegen, ohne dass es zu einem Kurzschluss kommt.

Eine erste entsprechende Referenz-Anordnung zeigt Fig. 3: Hier sind die ableitenden Kollektoren (beispielsweise etwa) in der Mitte der beiden Halbzellen der Durchflusszelle angeordnet und liegen direkt an der dazwischen angeordneten ionenpermeablen Membran (5) an. Beispielsweise können die Kollektoren (wie in Fig. 3 gezeigt) als leitende offenporige Metalle, wie Metallschäume (3), (4) oder Sintermetalle, ausgebildet sein.

Bei einer derartigen Anordnung erfolgt die Trennung der als pumpfähige Dispersion gegebenen Elektrodenmaterialien der Kathodendurchflusselektrode und der Anodendurchflusselektrode durch die ionenpermeable Membran. Diese darf keine geladenen Partikeln durchlassen, kann aber durchlässig für die Elektrolytlösung und muss mindestens durchlässig für Ionen sein. Die elektrischen Ladungen werden direkt über die Kollektoren, hier als Metallschäume, abgeführt (Entladung) oder zugeführt (Aufladung). Durch die schaumartige Ausformung der Kollektoren wird eine hohe Oberfläche derselben erzielt, die es ermöglicht, die Ladung der Partikel in den pumpfähigen Dispersionen weitgehend auszunutzen. Um den Innenwiderstand der erfindungsgemäßen Energiespeichersysteme, insbesondere in Form reiner Durchflusszellen (Durchflusselektroden für beide Polaritäten) möglichst gering zu halten, muss - im Falle der Ausführungsvariante für Referenzzwecke - die ionenpermeable Membran (auch allgemeiner als Separatormembran bezeichenbar) sehr dünn sein und der Abstand zwischen den Plus- und Minuspolkollektoren möglichst gering gehalten werden. Eine erfindungsgemäß vorteilhafte Variante ordnet deshalb die Kollektoren und die Abstandshalter in der Mitte zwischen zwei gegenpoligen Durchflusselektroden an (Fig. 1 bis 4). Ein Abstandshalter, welche auf der einen Seite mit einem einem Plus-Pol-Kollektor zur Ableitung der positiven Ladung und auf der anderen Seite mit einem Minus-Pol-Kollektor ausgestattet ist, wird auf der einen Seite mit der positiven Elektrodenmaterial, auf der anderen mit negativen Elektrodenmaterial um- und/oder durchspült, wobei die zugehörigen dispergierten Partikel der jeweiligen pumpfähigen Dispersionen mit den leitenden Oberflächen in Kontakt gebracht werden. Die Einheit aus Abstandshalter/Minus-Pol-Kollektor enthält Poren, welche Elektrolytlösung durchlässt, jedoch mindestens ionendurchlässig ist, ohne die Partikel in die jeweils entgegengesetzt gepolte Zelle durchzulassen. Die Poren müssen somit kleiner als die Partikelgrößen in den jeweiligen pumpfähigen Dispersionen sein. Solche Einheiten könnten beispielsweise nach einem erfindungsgemäßen Verfahren hergestellt werden, indem eine Separatorfolie (Abstandshalter) aus einem Glasfaservlies, einer Keramikfolie oder beispielsweise einer ionendurchlässigen Polymerfolie, auf die auf beiden Seiten als Kollektormaterial Metallpulver aufgebracht wird. Es kann aber alternativ beispielsweise eine Aluminium-Lochfolie (als Kollektor) auf einer Seite mit einer Seite mit einer ionendurchlässigen Schicht versehen (z.B. kaschiert oder bestrichen) werden, oder es wird auf einer Seite gezielt durch Oxidation eine sehr dünne Oxidschicht gebildet, welche dann mit der Oxidschichtseite auf eine weitere Metall-Lochfolie geklebt wird. Die Löcher oder Poren der Metallfolien (als Kollektoren) müssen kleiner sein als die Partikelgrößen der Dispersionen.

Durch eine derartige oder anderweitige erfindungsgemäße zentrale Anordnung der ladungsableitenden Kollektoren mit elektrolytdurchlässiger Beschaffenheit wird die Leistung von erfindungsgemäßen Energiespeichersystemen in Form von Durchflusszellen erheblich gesteigert.

Anstelle einer ionenpermeablen Membran kann die Trennung der pumpfähigen Dispersionen der Elektrodenmaterialien erfindungsgemäß auch durch die Kollektoren (10), (11) selbst erfolgen. Fig. 4 zeigt dies exemplarisch: Hier sind die ladungsleitenden Kollektoren (10), (11), durch nichtleitende Abstandshalter (12) voneinander getrennt, um einen Kurzschluss zu vermeiden. Die Kollektoren (10), (11), hier beispielsweise in Metallfolienform ausgebildet, sind porös derart, dass sie für die Partikel der als pumpfähige Dispersion vorliegenden Elektrodenmaterialien undurchlässig, jedoch mindestens für Ionen der Elektrolyte, in denen die Partikel dispergiert sind, durchlässig. Die Kollektoren (10), (11) sind direkt in leitendem Kontakt oder Bestandteil von porösen Leitern, die ein Durchfließen der pumpfähigen Dispersion ermöglichen, wie Metallschäumen (3), (4). Die Kollektoren (10), (11) können auch aus einem gesinterten, gut elektrisch leitfähigen Material, einem Vlies oder einem Gewebe oder einer Lochfolie mit den gerade genannten Durchlässigkeitseigenschaften bestehen.

Der Plus-Pol-Kollektor und der Minus-Pol-Kollektor (10), (11) werden durch nichtleitende Abstandshalter (12) auf Abstand gehalten, um einen Kurzschluss zu-vermeiden. Zwischen den Abstandshaltern oder in deren Innerem ermöglichen ein einem Elektrolyten vorhandene Ionen einen Ladungsfluss. Die Abstandshalter können aus einer (vorzugsweise Aussparungen aufweisenden) ionendurchlässigen Folie, Gewebe oder Vlies (z.B. Glasfasergewebe oder Glasfaservlies), durch nichtleitende Pulver, durch eine partielle (bevorzugt) oder vollflächige Beschichtung mindestens eines der Kollektoren (10) oder (11), wobei die Beschichtung auch ein Klebstoff sein kann, und/ oder durch eine partielle (bevorzugt) oder vollflächige Oxidschicht auf der Oberfläche mindestens eines der Kollektoren (10), (11) erzeugt vorliegen.

Die ladungsableitenden Kollektoren (10), (11), insbesondere in Folienform, können insbesondere in den Ausführungsformen gemäß Referenzbeispiel in Fig. 3 und erfindungsgemäßem Beispiel in Fig. 4 auch durch eine Beschichtung oder Bedruckung einer ionenpermeablen Membran oder (erfindungsgemäß) eines flächigen Abstandshalters mit einem Metall oder einem anderen leitfähigen Material hergestellt werden, wobei die entsprechende Membran oder der Abstandshalter ein- oder auch beidseitig beschichtet werden kann, was eine besonders einfache Herstellbarkeit bedeutet.

Referenz-Beispiel 2: Fig. 2 zeigt ein Beispiel für eine weitere Ausführungsform für Referenzzwecke: Hier ist ein Energiespeichersystem gezeigt, bei dem die entgegengesetzt geladenen Elektrodenmaterialien in Form pumpfähiger Dispersionen gemeinsam und vermischt in einem einzigen Behälter (9) (z.B. einem Tank) vorgelegt sind. Eine Teilchentrenneinheit (6) (Partikeltrennvorrichtung), beispielsweise in Form eines Siebes, Hydrozyklotronabscheiders oder (bei magnetisch anziehbaren, z.B. ferromagnetischen Partikeln) Magnetabscheidern, der Kathodendurchflusselektrode (3), der Anodendurchflusselektrode (4), der ionenpermeablen Membran (5), der Flüssigkeitstransportvorrichtung (8), hier z.B. als Pumpe, und Stromquelle oder Stromverbraucher (7). Der Behälter (9) kann auch hier als Doppeltank ausgelegt sein, wie in Beispiel 1 beschrieben.

Beispiel 3: Eine weitere erfindungsgemäße Ausführungsform zeigt Fig. 5 in Form eines schematisch gezeigten Ausschnittes einer asymmetrisch aufgebauten Durchflusszelle: Hier weist nur die Anodendurchflusselektrode (4) (oder alternativ die Kathodendurchflusselektrode (3), nicht gezeigt) das jeweilige pumpfähige Elektrodenmaterial beinhalten, während der Gegenpol eine Festelektrode (feststehende Elektrode) (13) ist. Die anderen Elemente, wie Abstandshalter (12), leitender Minus-Pol-Kollektor (11) (oder, nicht gezeigt, Plus-Pol-Kollektor (10)), sind wie vorstehend beschrieben (z.B. für Beispiel 1, 2 oder im allgemeinen Teil).

Bei allen vor- und nachstehend genannten Ausführungsformen der Erfindung sind die als pumpfähige Dispersion vorliegenden Elektrodenmaterialien im energieliefernden Zustand mindestens teilweise "geladen" und können so einen Strom liefern ((7) als Stromverbraucher), im energieaufnehmenden Zustand mindestens teilweise "entladen" und somit zur Speicherung von elektrischer Energie geeignet ((7) als Stromquelle).

### Referenz-Beispiel 4: Ausführungsform mit von Kanälen an einer Oberfläche durchzogenen Plus- und Minus-Pol-Kollektoren:

Fig. 6 zeigt für Referenzzwecke exemplarisch eine Ausführungsform bei der die Kollektoren (10,11) als Metall- (z.B. Kupfer)-Platten ausgelegt sind, in welche auf einer der Oberflächen Kanäle (17) (Aussparungen) eingebracht sind. Fig. 6A zeigt exemplarisch einen derartigen Kollektor (14) von der Seite, die im Funktionszustand mit einer ionenpermeablen Membran (5) (Fig. 6B, ohne Dichtung (19)) in Kontakt kommt. Zu- und Ableitung (15, 16) ermöglichen im Einbauzustand die Zufuhr der pumpfähigen Dispersion, welche direkt in die Kanäle (17) und wieder heraus oder über eine Sammelaussparung (18) (Reservoir) ein- und ausgeleitet werden kann. Die Form der Kanäle (17), hier exemplarisch als Schlangenform gezeigt, ermöglicht, insbesondere beim Durchpumpen mit hohem Druck, eine sehr gute Wechselwirkung der geladenen oder zu ladenden Partikel der pumpfähigen Dispersion und somit einen guten Ladungsaustausch (z.B. durch Scherkräfte, Aufprall auf Flächen, Turbulenzen oder dergleichen). Dichtungen (19) können vorgesehen sein, um die Kollektoren dichtend beispielsweise in Bereichen aneinanderzulegen, in denen keine ionenpermable Membran (5) vorgesehen ist.

### Referenz-Beispiel 5: Herstellung einer Elektroden-Dispersion

(A) 500 g des negativen Elektrodenmaterials Lithiumtitanat (Li₄Ti₅O₁₂) mit einer mittleren Teilchengröße von 2 bis 3 µm und einer spezifischen elektrochemischen Kapazität (Ladungsmenge) von 155 mA/g werden in 500 g einer Elektrolytlösung gegeben, welche aus (a) Ethylencarbonat, (b) Propylencarbonat, (c) Dimethylcarbonat oder (d) einer Mischung von Ethylencarbonat, Propylencarbonat und Dimethylcarbonat (im Volumenverhältnis 1:1:1) besteht, in welchen, vor Zugabe des negativen Elektrodenmaterials, die Lithiumsalze Lithiumhexafluorophosphat (LiPF₆) und Lithiumtetrafluorborat (LiBF₄) bis zur Sättigung bei Raumtemperatur (23°C) sowie 10 g des Netzmittels Alkylbenzolsulfonat gelöst werden. Die Vormischung des hierfür verwendeten Anodenmaterial-Pulvers in der Elektrolytlösung wird nun mit 600 bar durch einen Spalthochdruckhomogenisator (APV Gaulin 110 T, APV Gaulin GmbH, Langenhagen, Deutschland), gepumpt, um eine feine Verteilung und eine gute Benetzung der Partikeln zu erzielen.
(B) In analoger Weise wie in Abschnitt (A) wird nun ein positives Elektrodenmaterial als Dispersion hergestellt, unter Verwendung von 500 g des Kathodenmaterials Lithiumeisenphosphat aufgebracht auf feinpartikulären Kohlenstoff (C-LiFePO₄) mit einem mittleren Teilchendurchmesser von 0,5-1 µm und einer spezifischen Oberfläche von 12-18 qm/g.
(C) Die Dispersion aus (A) wird in das Behältnis 2 aus Fig. 1 gegeben, die Dispersion aus (B) wird in Behältnis 1 aus Fig. 1 gegeben. Die Lade- und Entladevorrichtung (7) ist in Fig. 1 und Fig. 2 schematisch dargestellt. Eine vergrößerte Darstellung der Elektrodenanordnung ist schematisch in Fig. 3 dargestellt. Sie besteht aus einer offenporigen Aluminiumschaumplatte als Plus-Pol-Kollektor (3) und aus gesintertem Kupfergranulat hergestellten als Minus-Pol-Kollektor (4). Beide für die Dispersionen durchlässige Kollektoren werden direkt mit einer Separatorfolie (ionenpermeable Membran (5)) aus Keramik zusammengepresst, so dass zwei Kammern entstehen, durch welche die Dispersionen mit Hilfe von Schlauchpumpen als Flüssigkeitstransportvorrichtung (8) gepumpt werden. Während des Pumpvorgangs, der 10 Minuten aufrecht erhalten wird, wird durch eine Stromquelle (7) eine Gleichspannung an die Kollektoren angelegt, wobei eine deutliche Ladungsaufnahme durch die Dispersionen gemessen wird. Die Ladestrommenge steigert sich bei höherer Durchflussleistung der Schlauchpumpen. Anschließend wird das Netzteil durch einen Stromverbraucher ersetzt und es kann ein Stromfluss von z.B. 5 Ampere in umgekehrter Richtung bei Betätigung der Schlauchpumpen (8) gemessen. Die Dispersionen geben ihre gespeicherte Ladung wieder an die Elektroden ab.
(D) In Fig. 2 werden beide aus (A) und (B) erhaltenen Dispersionen im Tank als Behältnis (9) vermischt und mittels der Pumpe als Flüssigkeitstransportvorrichtung (8) durch eine Teilchentrenneinheit (6) gepumpt, wodurch das Elektrodenmaterial aus (A) als Folge seiner größeren Teilchengröße (2-3 µm) von dem Elektrodenmaterial aus (B) (Teilchengröße unter 1 µm) getrennt wird. Nach dem Durchströmen der Durchflusszelle unter Aufladung werden beide Ströme wieder vereint und dem Behälter (9) zugeführt. Die Ladung und Entladung der Elektrodenmaterialien erfolgt in gleicher Weise wie in (C) beschrieben.

### Referenz-Beispiel 6: Auflad- und Entladbarkeit von nanoskaligen Elektrodenmaterialen.

Es wird mit einer Versuchsanordnung bewiesen, dass Elektrodenmaterialien, welche aus Partikeln mit nur wenigen Nanometer Durchmesser betragen und in einer Elektrolytlösung frei dispergiert sind, in der Lage sind, elektrische Ladung aufzunehmen und auch wieder abzugeben.

### Versuchsaufbau:

Als Zellen wird eine Anordnung von zwei Halbzellen in einem becherförmigen Gefäß hergestellt, welche durch eine ionenpermeable Membran voneinander getrennt sind.

Als Kollektoren (ableitende Elektroden) wurden beschichtete, elektrisch leitende Glaselektroden verwendet.

In jede Kammer wurden 12 g Elektrolytlösung folgender Zusammensetzung gegeben: 3-Methoxypropionitril, in welchem zuvor Bis-(trifluormethan)-sulfonimid-Lithiumsalz zu einer Konzentration von 1 mol/l aufgelöst wurde.

Als positives (positiv zu ladendes) Elektrodenmaterial wurden 2 g nanoskaliges Lithium-Kobalt-Oxid-Pulver (Sigma-Aldrich Kat.-Nr. 442704-A, Sigma-Aldrich Chemie GmbH, München, Deutschland) in der Elektrolytlösung für die Kathodenkammer dispergiert.

Als negatives (negativ zu ladendes) Elektrodenmaterial wurden 2 g Graphit einer durchschnittlichen Teilchengröße von 1-2 µm (Sigma-Aldrich, Katalognummer 28,286-3) in der Elektrolytlösung für die Anodenkammer dispergiert.

### Versuchsdurchführung:

Zuerst wurde der Stromfluss zwischen den Kammern der Elektrolytlösung, jedoch ohne Zusatz von Elektrodenmaterial, gemessen. Hier wurde eine Spannung von 3,6 V Gleichstrom angelegt. Es konnte nur ein sehr geringer Stromfluss von 0,5 µA gemessen werden.

Als nächster Schritt wurden die Elektrodenmaterialien in die Elektrolytlösung gegeben und lediglich mit einem Spatel verrührt (dispergiert). Beim Anlegen der gleichen Spannung von 3,6 V in der richtigen Polarität konnte sofort ein Stromfluss von 0,5 mA registriert werden., welcher jedoch nach 10-20 Sekunden deutlich zurückging. Wurde dann die Dispersion wieder gerührt, so stieg der Stromfluss wieder deutlich an. Danach wurden je 2 g positives und negatives Elektrodenmaterial zusätzlich in die Elektrolytlösungen gegeben und verrührt (dispergiert), so dass die Partikelkonzentration dadurch verdoppelt wurde. Nach Anlegen einer Spannung von 3,6 V konnte jetzt ein Stromfluss von 1 mA registriert werden, was der doppelten Strommenge, im Vergleich zur vorhergehenden Strommenge, entsprach.

Es wurden kleine Magnetrührer in die Halbzellen gegeben und für eine ständige Umwälzung (Rühren) der Flüssigkeiten gesorgt. Die Spannung von 3,6 V wurde jetzt für ca. 20 Minuten angelegt, um möglichst viele Partikel zu laden. Nach dem Ausschalten der Spannung zeigte sich deutlich ein Entladestrom für die Dauer von ca. 1 Minute bei einer messbaren Spannung von 2,7 V.

Mit dieser relativ einfachen Anordnung kann somit nachgewiesen werden, dass die in der Elektrolytlösung schwebenden Partikel Ladung aufnehmen und wieder abgeben können. Der Kontakt zu den Elektroden kann durch eine relativ sehr geringe Zirkulation der Dispersionen hergestellt werden. Elektrische Ladung kann in die Partikel eingebracht, dort gespeichert und wieder abgegeben werden. Der Versuch zeigt auch, dass bei doppelter Ladungsträgerkonzentration ein doppelt so hoher Stromfluss resultiert. Von Bedeutung ist auch, dass die Partikel der Dispersion durch Zirkulation an den elektrisch leitenden Elektroden vorbeigeführt werden müssen, um eine rasche Ladungsaufnahme bzw. Ladungsabnahme zu gewährleisten.

### Referenz-Beispiel 7: Durchführung einer kapazitiven Laduncisspeicherung nach dem Prinzip des Doppelschichtkondensators

200 g einer oberflächenaktiven Aktivkohle der Firma TIMCAL S.A., Bidio, Schweiz, mit einer durchschnittlichen Teilchengröße von 150 nm, werden mittels eines Spalthochdruckhomogenisators der Marke APV Gaulin (s.o.) in 800 g einer zuvor hergestellten Elektrolytlösung fein dispergiert. Als Elektrolytlösung wird eine gesättigte Lösung von Tetraethylammoniumborofluorid (TEABF) in Acetonitril hergestellt.

Die Dispersion wird nun zu gleichen Teilen in die Behältnisse 1 und 2 aus Fig. 1 gegeben und ich gleicher Weise wie für Beispiel 5 detailliert beschrieben durch die Lade- und Entladevorrichtung gepumpt. Für den Ladevorgang wird während des Pumpvorgangs eine Gleichspannung von 2,5 V für die Dauer von ca. 10 Minuten an die Kollektoren angelegt, wobei eine deutliche Ladungsaufnahme durch die Dispersionen gemessen wird. Die Ladestrommenge steigert sich bei höherer Durchflussleistung der Pumpen. Anschließend wird das Netzteil durch einen Stromverbraucher ersetzt und es kann ein Stromfluss von einigen Ampere in umgekehrter Richtung bei Betätigung der Pumpen (8) gemessen werden.

## Patentansprüche

1. Reversibles Speichersystem für elektrische Energie, umfassend eine ladungszu- oder -ableitende Fläche als Plus-Pol-Kollektor (10) und eine ladungszu- oder -ableitende Fläche als Minus-Pol-Kollektor (11) und eine Durchflusselektrode (3, 4) mit einer pumpfähigen Dispersion, die elektrische Energie kapazitiv und/oder chemisch speichernde Partikeln beinhaltet, wobei diese Partikel eine durchschnittliche Korngrößenverteilung von 1 nM bis 500 µm aufweisen, und mindestens eine Zuleitung und mindestens eine Ableitung für die pumpfähige Dispersion aufweist, in Kombination mit einer Gegenelektrode, die ebenfalls als Durchflusselektrode ausgeführt ist,
wobei das Speichersystem weiter zur Trennung der Plus- und Minus-Pol-Kollektoren mindestens einen nichtleitenden Abstandshalter (12) aufweist, wobei ein positives Elektrodenmaterial mit dem Plus-Pol-Kollektor (10) und ein negatives Elektrodenmaterial mit dem Minus-Pol-Kollektor (11) in Berührung steht,
und wobei je Durchflusselektrode (3,4) eines der besagten positiven oder negativen Elektrodenmaterialien in Form der entsprechenden pumpfähigen Dispersion beinhaltet ist, welches Elektrodenmaterial gemeinsam mit den übrigen Wandbereichen der Durchflusselektrode und
mit dem entsprechenden Plus-Pol-Kollektor (10) oder mit dem entsprechenden Minus-Pol-Kollektor (12),
und der mindestens einen Zuleitung und der mindestens einen Ableitung eine Kathoden- bzw. Anodendurchflusselektrode (3,4) ausbildet,
wobei der anliegende Kollektor (10, 11) zur Seite des oder der Abstandshalter (12) hin jeweils nicht für die Partikel der pumpfähigen Dispersion durchlässig sind, jedoch für Elektrolyte durchlässig sind,
und wobei das positive und das negative Elektrodenmaterial parallel zur Anordnung des oder der Abstandshalter und parallel zueinander, angeordnet sind und auf einander gegenüberliegenden flächigen Seiten der Anordnung des oder der Abstandshalter angeordnet sind derart, dass auf der gleichen Seite der Abstandshalter nur mindestens ein positives Elektrodenmaterial und mindestens ein Plus-Pol-Kollektor und auf der gegenüberliegenden Seite nur mindestens ein negatives Elektrodenmaterial und ein Minus-Pol-Kollektor vorgesehen sind,
wobei die pumpfähige Dispersion auf einer von der an die Abstandshalter anliegenden flächigen Seite des jeweiligen Kollektors abgewandten Seite angeordnet ist, wobei sie in den jeweiligen Kollektor mindestens teilweise eindringen kann, und
wobei bei dem besagten Speichersystem optional zusätzlich mindestens ein Behälter, der mindestens eine der pumpfähigen Dispersionen beinhaltet, eine Flüssigkeitstransportvorrichtung und Verbindungsmittel zum Transport der pumpfähigen Dispersion von dem Behälter zu der mindestens einen Zuleitung und von der mindestens einen Ableitung der jeweiligen Durchflusselektrode und zurück zum Elektrolytbehälter vorgesehen sind,
***dadurch gekennzeichnet,* dass** der Minus-Pol-Kollektor und der Plus-Pol-Kollektor eine flächige Gestalt mit einer einzigen äußeren geschlossenen Berandung aufweisen und mit einer ihrer flächigen Seiten jeweils an den oder die Abstandshalter (12) anliegen, und
die Partikel in einer wasserfreien Elektrolytlösung dispergiert sind,
wobei die ladungsableitenden Kollektoren (10, 11) derart gelöchert oder porös ausgeführt sind, dass die Partikel die einander und dem mindestens eine Abstandhalter (12) zugewandten Seiten der Kollektoren nicht durchdringen können, jedoch die Flüssigkeit der pumpfähigen Dispersion und darin gelöste Ionen, und wobei zur Trennung der Plus- und Minus-Kollektoren (10, 11) ein oder mehrere nicht Leitende Abstandshalter (12) vorgesehen sind, die Lücken aufweisen, die mit Elektrolyt gefüllt sind.

2. Energiespeichersystem nach Anspruch 1, **dadurch gekennzeichnet, dass** es mindestens eine Kathodendurchflusselektrode (3) und mindestens eine Anodendurchflusselektrode (4) aufweist.

3. Energiespeichersystem nach einem der Ansprüche 1 bis 2, bei dem die Partikeln der pumpfähigen Dispersion eine mittlere Korngrößenverteilung von von 1 nM bis 1 µm, insbesondere von 1 nM bis 250 nm, vor allem von 1 nM bis 100 nm, aufweisen.

4. Energiespeichersystem nach einem der Ansprüche 1 bis 3, bei welchem die pumpfähige Dispersion Netz- und/oder Dispergiermittel beinhaltet.

5. Energiespeichersystem nach einem der Ansprüche 1 bis 4, **dadurch gekennzeichnet, dass** die pumpfähige Dispersion jeweils mindestens ein Lösungsmittel und mindestens einen Elektrolyten beinhaltet.

6. Verfahren zur Abgabe elektrischer Energie unter Verwendung eines Energiespeichersystems nach einem der Ansprüche 1 bis 5, bei dem mindestens eines, vorzugsweis mindestens ein Paar der entgegengesetzt geladenen Elektrodenmaterialien in Form der pumpfähigen Dispersion, die elektrische Energie kapazitiv und/oder chemisch speichernde Partikeln beinhaltet, kontinuierlich und/oder diskontinuierlich durch mindestens eine der Durchflusselektroden (3,4), vorzugsweise mindestens ein Paar der entgegengesetzt geladen vorgesehenen Durchflusselektroden (3,4), befördert wird und die Ladung durch den oder die zugehörigen Plus- und/oder Minus-Pol-Kollektoren (10,11) abgeleitet wird.

7. Verfahren nach Anspruch 6, **dadurch gekennzeichnet, dass** die Zufuhr der Dispersionen unter Druck, vorzugsweise von 1 bis 3000 bar, z.B. von 100 bis 1000 bar, oder von 1 bis 20 bar, durch die vorzugsweise mit porösen Materialien als ableitende Kollektoren ausgestatteten bestückten Durchflusselektroden (3,4) der Energiespeichersysteme gepresst wird.

## Claims

1. Reversible storage system for electrical energy, comprising charge-feeding or charge-diverting surface as a positive-pole collector (10) and a charge-feeding or charge-diverting surface as a negative-pole collector (11) and a flow electrode (3,4) having a pumpable dispersion which contains particles storing electrical energy in a capacitive and/or chemical manner, wherein these particles have an average grain size distribution of 1 nM to 500 µm, and at least one feed and at least one drain for the pumpable dispersion, in combination with a counter electrode which is likewise designed as a flow electrode, wherein the storage system further comprises at least one non-conductive spacer (12) to separate the positive-pole and negative-pole collectors, wherein a positive electrode material is in contact with the positive-pole collector (10) and a negative electrode material is in contact with the negative-pole collector (11),
and wherein each flow electrode (3, 4) of one of said positive or negative electrode materials is contained in the form of the corresponding pumpable dispersion, which electrode material, together with the remaining wall regions of the flow electrode and with the corresponding positive-pole collector (10) or with the corresponding negative-pole collector (12), and the at least one feed and the at least one drain, forms a cathode flow electrode and an anode flow electrode (3, 4) respectively,
wherein, towards the side of the spacer(s) (12), the contacting collectors (10, 11) are each not permeable to the particles of the pumpable dispersion but are permeable to electrolytes,
and wherein the positive and negative electrode materials are disposed in parallel with the arrangement of the spacer(s) and in parallel with each other and, on mutually opposite flat sides of the arrangement of the spacer(s), are disposed in such a way that on the same side of the spacers only at least one positive electrode material and at least one positive-pole collector are provided and on the opposite side only at least one negative electrode material and one negative-pole collector are provided,
wherein the pumpable dispersion is present on a side facing away from the flat side of the respective collector which lies against the spacers, wherein it can at least partially penetrate into the respective collector, and
wherein, in said storage system, at least one container, which contains at least one of the pumpable dispersions, a liquid transport device and connecting means for transporting the pumpable dispersion from the container to the at least one feed and from the at least one drain of the respective flow electrode and back to the electrolyte container are additionally optionally provided,
**characterised in that** the negative-pole collector and the positive-pole collector are of a flat construction with a single outer closed edge and lie with one of their flat sides against the respective spacer(s) (12), and
the particles are dispersed in a waterless electrolyte solution,
wherein the charge-diverting collectors (10, 11) are perforated or porous such that the particles cannot penetrate the sides of the collectors which face one another and the at least one spacer (12) but rather the liquid of the pumpable dispersion and ions dissolved therein, and wherein in order to separate the positive and negative collectors (10, 11) one or a plurality of non-conductive spacers (12) are provided which comprise holes filled with electrolyte.

2. Energy storage system as claimed in claim 1, **characterised in that** it comprises at least one cathode flow electrode (3) and at least one anode flow electrode (4).

3. Energy storage system as claimed in any one of claims 1 to 2, in which the particles of the pumpable dispersion have an average grain size distribution of 1 nM to 1 µm, in particular from 1 nM to 250 nm, especially from 1 nM to 100 nm.

4. Energy storage system as claimed in any one of claims 1 to 3, in which the pumpable dispersion contains wetting and/or dispersion agents.

5. Energy storage system as claimed in any one of claims 1 to 4, **characterised in that** the pumpable dispersion contains each of at least one solvent and at least one electrolyte.

6. Method for outputting electrical energy using an energy storage system as claimed in any one of claims 1 to 5, in which at least one, preferably at least a pair, of the oppositely charged electrode materials in the form of the pumpable dispersion, which contains particles storing electrical energy in a capacitive and/or chemical manner, is delivered continuously and/or discontinuously through at least one of the flow electrodes (3, 4), preferably at least a pair of the oppositely charged flow electrodes (3, 4) provided, and the charge is diverted through the associated positive-pole and/or negative-pole collector(s) (10, 11).

7. Method as claimed in claim 6, **characterised in that** the supply of the dispersions is pressed at a pressure of preferably 1 to 3000 bar, e.g. 100 to 1000 bar, or 1 to 20 bar, through the flow electrodes (3, 4) of the energy storage systems, which flow electrodes are preferably fitted with porous materials as diverting collectors.

## Revendications

1. Système d'accumulateur réversible pour énergie électrique, comprenant une face d'alimentation ou d'évacuation de charge comme collecteur de pôle positif (10) et une face d'alimentation ou d'évacuation de charge comme collecteur de pôle négatif (11) et une électrode à écoulement (3, 4) avec une dispersion susceptible d'être pompée qui contient des particules accumulant de l'énergie électrique sous forme capacitive et/ou chimique, dans lequel ces particules présentent une distribution granulométrique moyenne de 1 nM à 500 µm, et présente au moins une conduite d'alimentation et au moins une conduite d'évacuation pour la dispersion susceptible d'être pompée, en combinaison avec une contre-électrode qui est également réalisée sous forme d'électrode à écoulement,
dans lequel le système d'accumulateur présente en outre au moins un écarteur non conducteur (12) pour la séparation des collecteurs de pôle positif et de pôle négatif, dans lequel un matériau d'électrode positif est en contact avec le collecteur de pôle positif (10) et un matériau d'électrode négatif est en contact avec le collecteur de pôle négatif (11),
et dans lequel chaque électrode à écoulement (3, 4) de l'un desdits matériaux d'électrode positifs ou négatifs est contenue sous la forme de la dispersion susceptible d'être pompée correspondante, ledit matériau d'électrode formant, en un ensemble avec les autres régions de paroi de l'électrode à écoulement et avec le collecteur de pôle positif correspondant (10) ou avec le collecteur de pôle négatif correspondant (11), et avec ladite au moins une conduite d'alimentation et ladite au moins une conduite d'évacuation, une électrode à écoulement cathodique ou anodique,
dans lequel le collecteur adjacent (10, 11) vers le côté du ou des écarteur(s) (12) ne sont pas perméables pour les particules de la dispersion susceptible d'être pompée, mais sont perméables pour l'électrolyte,
et dans lequel le matériau d'électrode positif et le matériau d'électrode négatif sont agencés parallèlement à l'agencement du ou des écarteur(s) et parallèlement l'un à l'autre et ils sont agencés sur des côtés plats opposés l'un à l'autre de l'agencement du ou des écarteur(s), de telle manière qu'il ne soit prévu sur le même côté des écarteurs qu'au moins un matériau d'électrode positif et au moins un collecteur de pôle positif et sur le côté opposé qu'au moins un matériau d'électrode négatif et un collecteur de pôle négatif,
dans lequel la dispersion susceptible d'être pompée est agencée sur un côté situé à l'opposé du côté plat du collecteur respectif appliqué sur les écarteurs, dans lequel elle peut pénétrer au moins partiellement dans le collecteur respectif, et
dans lequel il est en outre prévu en option, dans ledit système d'accumulateur, au moins un récipient, qui contient au moins l'une des dispersions susceptibles d'être pompées, un dispositif de transport de liquide et des moyens de raccordement pour le transport de la dispersion susceptible d'être pompée depuis le récipient jusqu'à ladite au moins une conduite d'alimentation et de ladite au moins une conduite d'évacuation de l'électrode à écoulement respective et retour au récipient d'électrolyte,
**caractérisé en ce que** le collecteur de pôle négatif et le collecteur de pôle positif présentent une forme plate avec un seul encadrement extérieur fermé et reposent par un de leurs côtés plats respectivement sur le ou les écarteur(s) (12) et
les particules sont dispersées dans une solution électrolytique sans eau,
dans lequel les collecteurs d'évacuation de charge (10, 11) sont perforés ou poreux, de telle manière que les particules ne puissent pas traverser les côtés des collecteurs tournés l'un vers l'autre et vers ledit au moins un écarteur (12), mais bien le liquide de la dispersion susceptible d'être pompée et les ions dissous dans celle-ci et dans lequel il est prévu, pour la séparation des collecteurs de pôle positif et de pôle négatif (10, 11) un ou plusieurs écarteur(s) non conducteurs (12) présentant des creux qui sont remplis d'électrolyte.

2. Système d'accumulateur d'énergie selon la revendication 1, **caractérisé en ce qu'**il présente au moins une électrode à écoulement cathodique (3) et au moins une électrode à écoulement anodique (4).

3. Système d'accumulateur d'énergie selon l'une des revendications 1 à 2, dans lequel les particules de la dispersion susceptible d'être pompée présentent une distribution granulométrique moyenne de 1 nM à 1 µm, en particulier de 1 nM à 250 nm, et avant tout de 1 nM à 100 nm.

4. Système d'accumulateur d'énergie selon l'une quelconque des revendications 1 à 3, dans lequel la dispersion susceptible d'être pompée contient des agents mouillant et/ou dispersant.

5. Système d'accumulateur d'énergie selon l'une quelconque des revendications 1 à 4, **caractérisé en ce que** la dispersion susceptible d'être pompée contient chaque fois au moins un solvant et au moins un électrolyte.

6. Procédé de fourniture d'énergie électrique par utilisation d'un système d'accumulateur d'énergie selon l'une quelconque des revendications 1 à 5, dans lequel au moins un, de préférence au moins une paire des matériaux d'électrode de charge opposée est transporté, sous la forme d'une dispersion susceptible d'être pompée, qui contient des particules accumulant de l'énergie électrique sous forme capacitive et/ou chimique, de façon continue et/ou discontinue à travers au moins l'une des électrodes à écoulement (3, 4), de préférence au moins une paire des électrodes à écoulement (3, 4) prévues avec une charge opposée et la charge est évacuée à travers le ou les collecteur(s) de pôle positif et/ou de pôle négatif correspondant(s) (10, 11).

7. Procédé selon la revendication 6, **caractérisé en ce que** l'alimentation des dispersions est chassée sous pression, de préférence de 1 à 3000 bar, par exemple de 100 à 1000 bar, ou de 1 à 20 bar, à travers les électrodes à écoulement (3, 4) des systèmes d'accumulateur d'énergie garnies de préférence de matériaux poreux comme collecteurs d'évacuation.
